# EUROPÄISCHE PATENTSCHRIFT

(11) **EP 4 491 362 B1**
(45) Veröffentlichungstag und Bekanntmachung des Hinweises auf die Patenterteilung: **11.03.2026**
(21) Anmeldenummer: 24183027.2
(22) Anmeldetag: 19.06.2024
(51) Int. Cl.: B28B 1/52, B01F 27/00, B27N 1/02, B27N 3/00, B28B 3/12, B28B 15/00, B28C 5/08, B28C 5/14, B28C 5/16, B28C 5/40, B28C 7/04, B28C 7/10, B30B 5/04, B65G 53/46, B28C 7/16, B01F 27/172, B01F 27/721, B01F 27/726, B01F 35/45, B30B 5/06

(54) **VERFAHREN UND VORRICHTUNGEN ZUR HERSTELLUNG VON STROHPLATTEN**
METHODS AND APPARATUS FOR THE PRODUCTION OF STRAW PANELS
PROCÉDÉ ET DISPOSITIF POUR LA FABRICATION DE PLAQUES DE PAILLE

(30) Priorität: 11.07.2023 DE 102023206587
(43) Veröffentlichungstag der Anmeldung: 15.01.2025
(73) Patentinhaber: Johann Bergmann GmbH & Co, 95359 Kasendorf (DE)
(72) Erfinder: GROPPWEIS, Sebastian, 95359 Kasendorf (DE); EBERLEIN, Johannes, 95359 Kasendorf (DE); HUPPENBERGER, Gerhard, 95359 Kasendorf (DE); JUNG, Till, 95359 Kasendorf (DE); SCHIEßL, Siegfrid, 95359 Kasendorf (DE)
(74) Vertreter: Dr. Solf & Zapf Patent- und Rechtsanwalts PartG mbB

(56) Entgegenhaltungen:
- EP-A1- 2 289 682
- EP-A2- 1 528 339
- EP-A2- 2 011 391
- WO-A1-99/14022
- DE-A1- 102017 104 780
- DE-A1- 3 417 025
- IT-A1- PR20 120 097
- US-A- 3 506 201

## Beschreibung

Die vorliegende Erfindung betrifft ein Verfahren und Vorrichtungen zur Herstellung von Strohplatten.

Die EP 2 799 639 A1 offenbart eine Dämmplatte zur Dämmung einer Gebäudefassade, wobei die Dämmplatte aus Stroh, welches mittels eines Klebstoffes zusammengehalten wird, aufgebaut ist. Bei dem Klebstoff kann es sich um Leim, insbesondere Pflanzenleim, oder Stärkekleber handeln. Die Herstellung der Dämmplatte erfolgt durch Vermischen von, vorzugsweise gehäckseltem Stroh mit dem Klebstoff, leichtes Verpressen der Stroh-Klebstoff-Mischung zu einer Dämmplatte und Stehenlassen der so hergestellten Dämmplatte zum Austrocknen derselben. Zum Austrocknen wird die Dämmplatte vorzugsweise erwärmt, insbesondere auf eine Temperatur von ca. 25 -50 °C.

Aus der DE 198 10 862 A1 geht eine Dämmplatte aus Stroh hervor, bei der die Faserlänge des Strohs maximal 150 mm ist, das Stroh faserig zerkleinert ist und die geschlossene Halmstruktur durch Längsspleißung zerstört ist, die Strohfasern mit einem biologisch abbaubaren Bindemittel homogen gemischt sind, das Gemisch aus Strohfasern und Bindemittel geringfügig mechanisch zu Plattenmaterial verdichtet ist, die Mindestdicke der Platte 30 mm beträgt und die Rohdichte 40 bis 100 kg/m³ beträgt. Die Platte ist zudem beidseitig mit einer flexiblen gitterartigen Naturfaser-Beschichtung versehen. Vorzugsweise weisen die Strohfasern weitgehend eine Länge von mindestens 2 mm oder mehr auf. Die Herstellung der Dämmplatte erfolgt durch faseriges Zerkleinern des Strohs und Aufspleißen des Strohs in der Länge zu einer Fraktion mit Faserlängen bis maximal 150 mm. Die Faserfraktion wird anschließend homogen mit einem biologisch abbaubaren, Wasser im Überschuss enthaltenden Bindemittel gemischt und die Mischung auf eine mit Bindemittel getränkte Bahn des Beschichtungsmaterials unter geringfügiger Verformung fortlaufend aufgetragen. Das Mischen der Faserfraktion mit Bindemittel und Flammschutzmittel erfolgt vorzugsweise in einer Mischvorrichtung. Die homogene Mischung wird dann von einem Förderband in ein Mischsilo gefördert, das am unteren Ende eine Austragwalze aufweist und oberhalb eines Plattenförderbandes angeordnet ist, auf dem die getränkte Bahn des Beschichtungsmaterials angeordnet ist.

Auf die so entstehende Dämmstoffbahn wird eine obere, mit Bindemittel getränkte Beschichtungsbahn aufgelegt und die so entstandene Dämmstoffbahn wird durch eine Heizzone gefördert und getrocknet und gegebenenfalls vulkanisiert. Dies erfolgt vorzugsweise im Heißluft-Durchströmverfahren mit einer Heißlufttemperatur von etwa 100°C. Beim Trocknen wird das Bindemittel getrocknet bzw. vulkanisiert, wobei der sich bildende Wasserdampf als Wärmeträger dient und die Vulkanisation fördert. Die getrocknete Bahn wird anschließend zu Platten geschnitten.

WO 99/14022 A1 offenbart eine Vorrichtung zur Herstellung von Strohplatten nach dem Oberbegriff des Anspruchs 1.

Aufgabe der vorliegenden Erfindung ist die Bereitstellung eines kostengünstigen Verfahrens und einer Vorrichtung zur Herstellung von Strohplatten, das bzw. die eine gleichmäßige und gute Qualität der hergestellten Strohplatten gewährleistet.

Diese Aufgabe wird durch eine Vorrichtung gemäß Anspruch 1 und ein Verfahren gemäß Anspruch 22 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Eine vereinfachte, schematische Darstellung der erfindungsgemäßen Vorrichtung gemäß einer ersten Ausführungsform der Erfindung
- Figur 2:: Eine vereinfachte, schematische Darstellung der erfindungsgemäßen Vorrichtung gemäß einer weiteren Ausführungsform der Erfindung
- Figur 3:: Eine vereinfachte, schematische seitliche Darstellung einer Strohballenauflösungseinrichtung
- Figur 4:: Eine vereinfachte, schematische seitliche Darstellung einer Wiegeeinrichtung
- Figur 5:: Eine perspektivische Ansicht der Wiegeeinrichtung
- Figur 6:: Eine vereinfachte, schematische seitliche Darstellung einer Rüttelrinne mit Kalk-Zuführeinrichtung
- Figur 7:: Eine perspektivische Ansicht der Kalkhydrat-Zuführeinrichtung
- Figur 8:: Einen Längsschnitt der Kalkhydrat-Zuführeinrichtung
- Figur 9:: Eine perspektivische, halbgeschnittene Ansicht der Kalkhydrat-Zuführeinrichtung
- Figur 10:: Einen vereinfachten, schematischen Längsschnitt durch eine erfindungsgemäße Mischeinrichtung und einen Zyklonabscheider
- Figur 11:: Einen vereinfachten, schematischen Querschnitt durch einen Etagenmischer der Mischeinrichtung ohne Zwischenboden

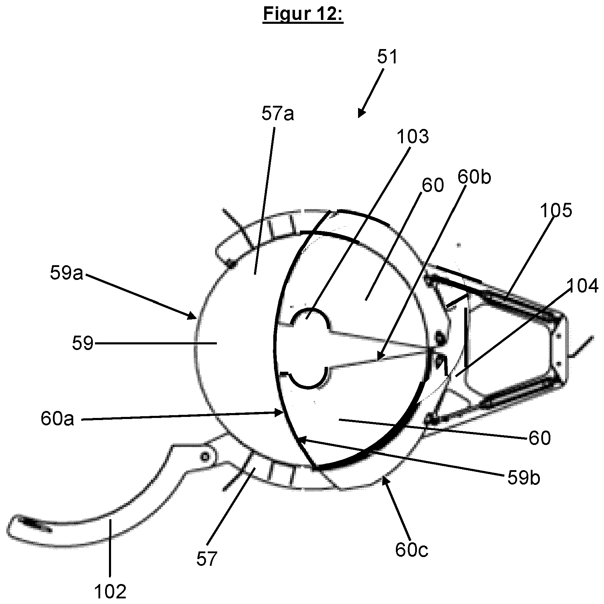

- Figur 12:: Einen weiteren Querschnitt durch den Etagenmischer ohne Mischerwelle

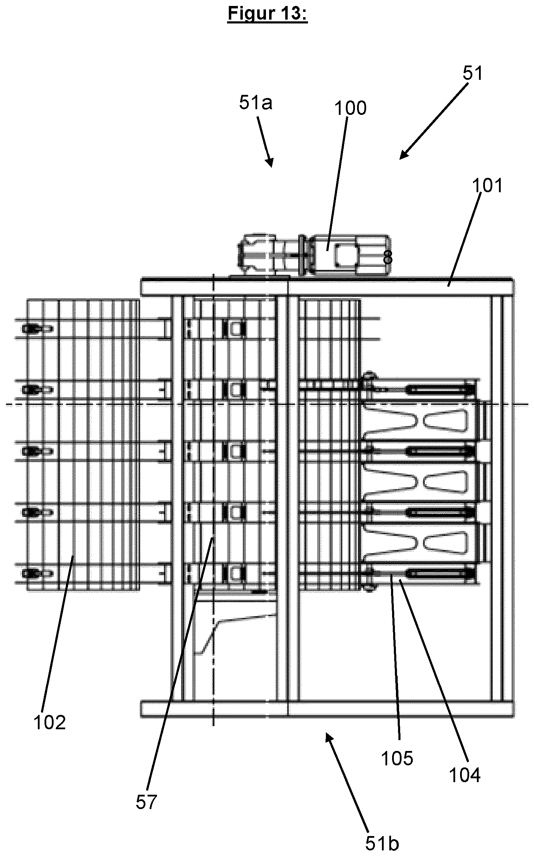

- Figur 13:: Eine Seitenansicht des Etagenmischers
- Figur 14:: Eine vereinfachte, schematische seitliche Darstellung der Mischeinrichtung und einer Dämmplattenpresseinrichtung ohne eine Schneideinrichtung
- Figur 15:: Eine perspektivische Darstellung eines Bereichs der Dämmplattenpresseinrichtung
- Figur 16:: Eine weitere perspektivische Darstellung eines Bereichs der Dämmplattenpresseinrichtung ohne eine Seitenwand
- Figur 17:: Eine perspektivische Darstellung einer Wurfeinrichtung der Dämmplattenpresseinrichtung
- Figur 18:: Eine vereinfachte, schematische seitliche Darstellung einer Plattenpresseinrichtung gemäß der weiteren Ausführungsform der erfindungsgemäßen Vorrichtung
- Figur 19:: Stark vereinfacht und schematisch eine Darstellung der erfindungsgemäßen Vorrichtung gemäß der weiteren Ausführungsform der Erfindung mit weiteren Fördermitteln zwischen der Mischeinrichtung und der Plattenpresseinrichtung
- Figur 20:: Eine vereinfachte, schematische Darstellung der erfindungsgemäßen Vorrichtung gemäß einer weiteren Ausführungsform der Erfindung

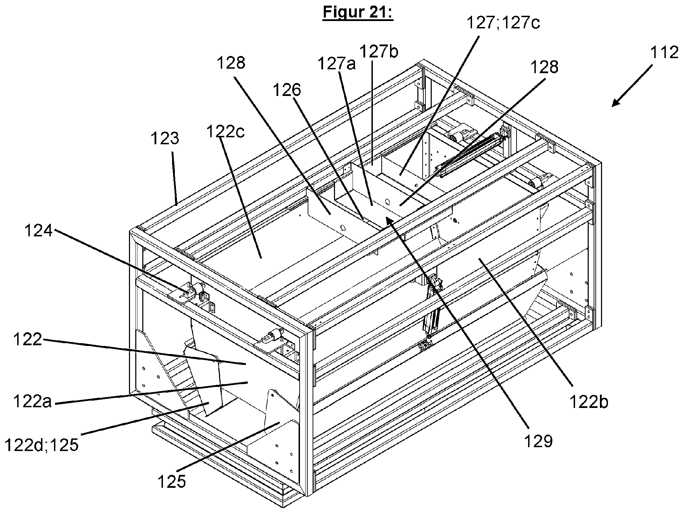

- Figur 21:: Eine perspektivische Ansicht einer weiteren Wiegeeinrichtung, Verschließschieber in halb geschlossener Stellung

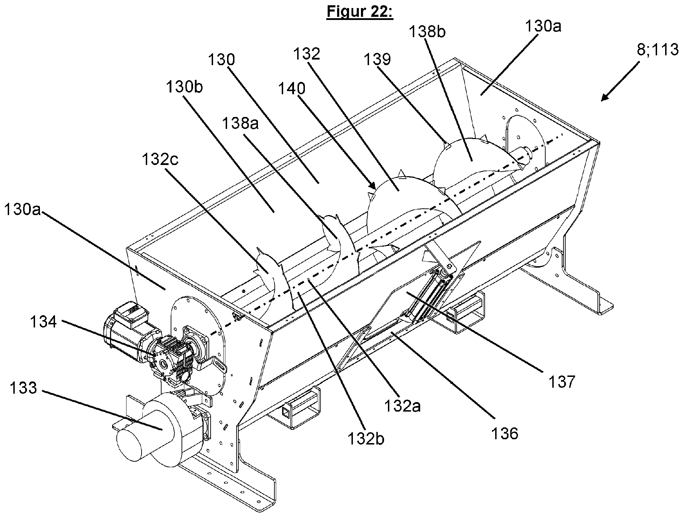

- Figur 22:: Eine perspektivische Ansicht eines erfindungsgemäßen Schneckenmischers

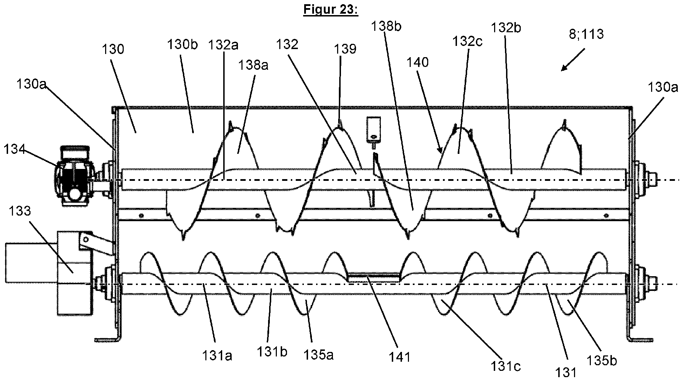

- Figur 23:: Eine Schnittansicht des erfindungsgemäßen Schneckenmischers

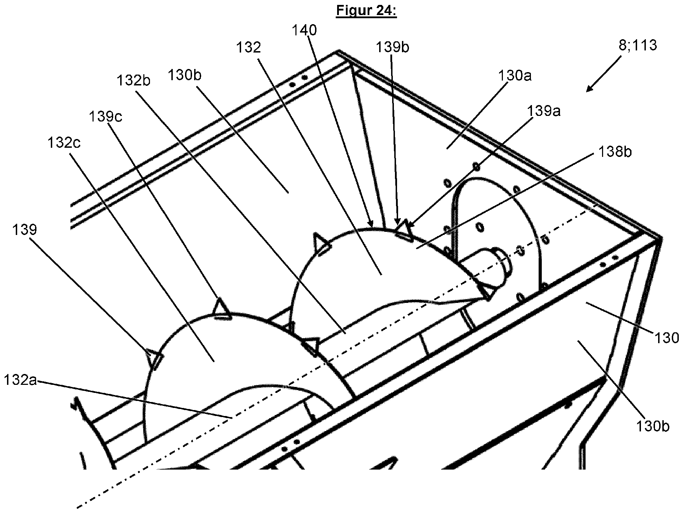

- Figur 24:: Einen Teil einer Draufsicht auf den erfindungsgemäßen Schneckenmischer

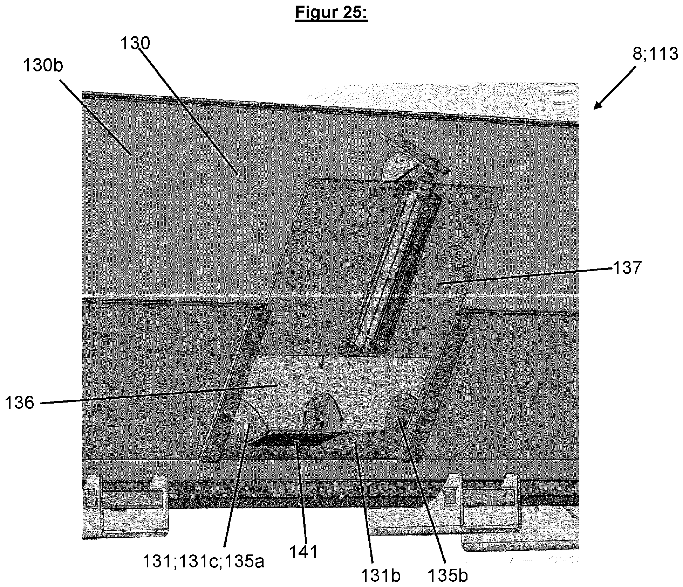

- Figur 25:: Einen Teil einer Seitenansicht des erfindungsgemäßen Schneckenmischers

Die erfindungsgemäße Vorrichtung 1 dient zur Herstellung von Strohplatten 12;13. Die herzustellenden Strohplatten 12;13 sind vorzugsweise einschichtig bzw. monolithisch aufgebaut und bestehen aus Stroh, welches mit einer erhärteten Bindemittelmatrix zusammengehalten wird. Die Bindemittelmatrix verbindet die einzelnen Strohhalme miteinander.

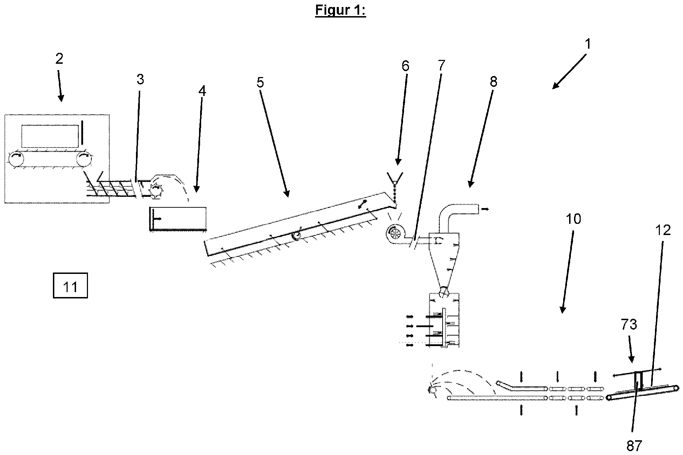

Gemäß einer ersten Ausführungsform der Erfindung (Fig. 1) dient die erfindungsgemäße Vorrichtung 1 zur Herstellung von dämmenden Strohplatten 12 bzw. Strohdämmplatten 12 und weist einander nachgeordnet eine Strohballenauflösungseinrichtung 2, einen Förderkanal 3, eine Wiegeeinrichtung 4, eine Rüttelrinne 5, eine Kalkhydrat-Zuführeinrichtung 6, vorzugsweise einen weiteren Förderkanal 7, vorzugsweise einen Zyklonabscheider (50), eine erfindungsgemäße Mischeinrichtung 8 sowie vorzugsweise einen weiteren Förderkanal 9 und eine Dämmplattenpresseinrichtung 10 auf. Zudem weist die Vorrichtung 1 eine Steuereinrichtung 11 zur Steuerung des Herstellungsverfahrens auf.

Nachgeordnet im Sinne der Anmeldung meint, dass die jeweilige Einrichtung bei der Herstellung nach der vorgeordneten Einrichtung durchlaufen wird.

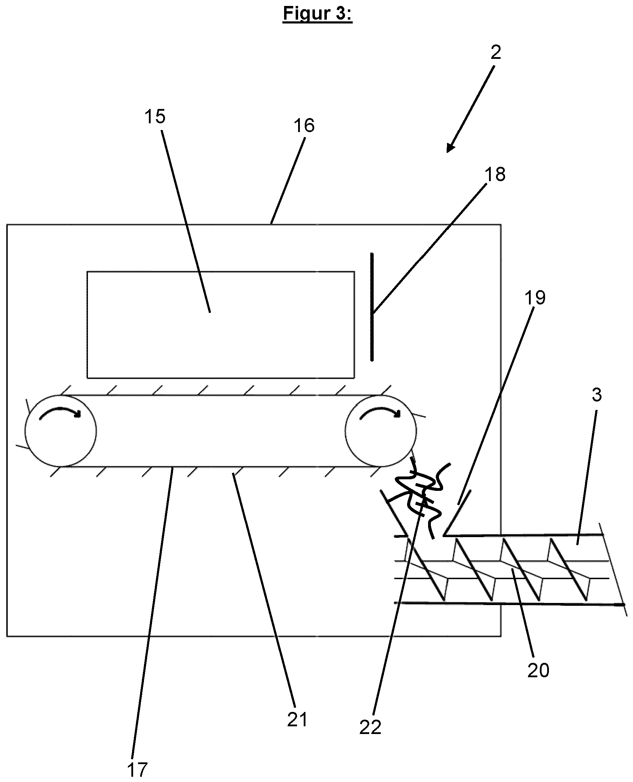

Die Strohballenauflösungseinrichtung 2 (Fig. 1,2,3) dient in an sich bekannter Weise zum Auflösen und Auflockern eines Strohballens 15. Vorzugsweise besteht der Strohballen 15 aus Getreidestroh, bevorzugt Weizenstroh, oder Hanfstroh oder Schilfstroh oder Rohrkolbenstroh (=Typhastroh).

Unter Stroh versteht man allgemein ausgedroschene und trockene Halme und/oder Blätter von Pflanzen.

Derartige Strohballenauflösungseinrichtungen 2 werden beispielsweise in Pferdeställen verwendet. Mittels der Strohballenauflösungseinrichtung 2 werden die Strohballen 15 aufgelöst und aufgelockert, ohne, dass dabei die Strohhalme zerkleinert werden.

Die Strohballenauflösungseinrichtung 2 weist vorzugsweise in an sich bekannter Weise ein Gehäuse 16, ein Fräsband 17, eine Widerlagerplatte 18, einen Aufnahmetrichter 19 und eine Austragsförderschnecke 20 auf. Das Fräsband 17, die Widerlagerplatte 18 und der Aufnahmetrichter 19 sind im Gehäuse 16 angeordnet. Die Austragsförderschnecke 20 ist teilweise im Gehäuse 16 angeordnet und mündet an die Umgebung bzw. führt nach draußen.

Zum Auflösen und Auflockern wird der Strohballen 15 auf das umlaufend angetriebene Fräsband 17 aufgelegt und von diesem gegen die Widerlagerplatte 18 gedrückt, die am Ende des horizontalen Fräsbandes 17 über diesem angeordnet ist. Dabei wird der Strohballen 15 mittels der Fräskanten 21 des Fräsbands 17 aufgelöst und das aufgelöste und aufgelockerte Stroh 22 fällt am Ende des Fräsbandes 17 von dem Fräsband 17 herunter in den Aufnahmetrichter 19 hinein. Der Aufnahmetrichter 19 wiederum mündet in die Austragsförderschnecke 20, welche das Stroh 22 aus dem Gehäuse 16 heraus fördert in den Förderkanal 3 hinein.

Vorzugsweise werden zudem Körner und andere Feinteile, die beim Auflösen des Strohballens 15 entstehen, aus dem Gehäuse 16 abgesaugt.

Wie bereits erläutert, wird das Stroh 22 in den Förderkanal 3 und durch diesen durch hin zur Wiegeeinrichtung 4 gefördert. Vorzugsweise erfolgt die Förderung dabei lediglich durch den durch die Austragsförderschnecke 20 erzeugten Förderdruck.

Am wiegeeinrichtungsseitigen Ende weist der Förderkanal 3 zudem vorzugsweise einen Sensor 23 zur Detektion bzw. Messung des Förderdrucks auf. Zudem weist der Förderkanal 3 am wiegeeinrichtungsseitigen Ende eine Fräswalze 24 und eine Umlenkhaube 25 auf.

Die Detektion des Förderdrucks dient dazu, um die Fördermenge konstant zu halten. Werden Abweichungen vom Soll-Förderdruck festgestellt, wird die Strohballenauflösungseinrichtung 2 so angesteuert, dass sie mehr oder weniger Stroh 22 bereitstellt. Die Strohballenauflösungseinrichtung 2 wird also unter anderem auf Basis des mittels des Sensors 23 gemessenen Förderdrucks gesteuert.

Mittels der Fräswalze 24 wird das Stroh 22 portionsweise in die Wiegeeinrichtung 4 gefördert. Dazu weist die Fräswalze 24 in an sich bekannter Weise Fräskanten 24a auf. Mittels der Fräskanten 24a werden einzelne Strohportionen aus dem Strohverbund heraus geteilt und jeweils eine Strohportion zwischen zwei benachbarten Fräskanten 24a aufgenommen und in die Wiegeeinrichtung 4 gefördert. Dabei wird das Stroh 22 mittels der Umlenkhaube 25 derart umgelenkt bzw. geführt, dass es in die Wiegeeinrichtung 4 hineinfällt.

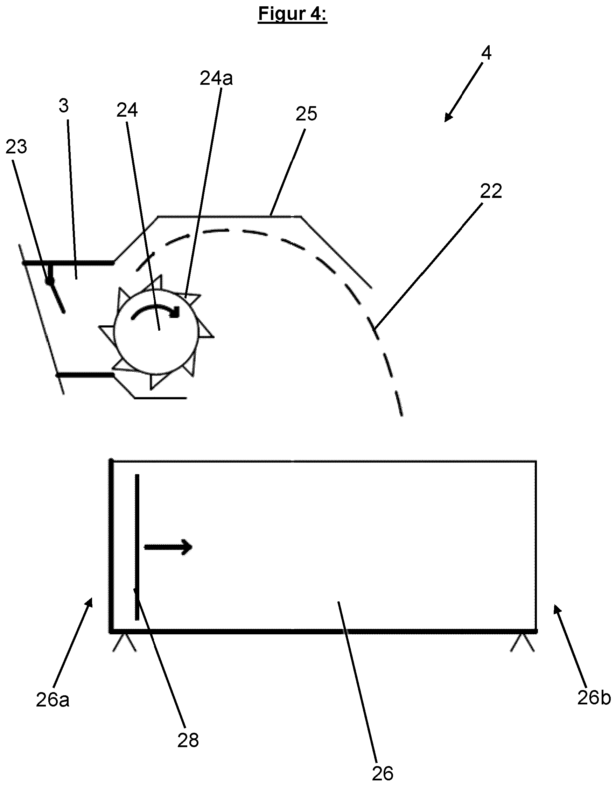

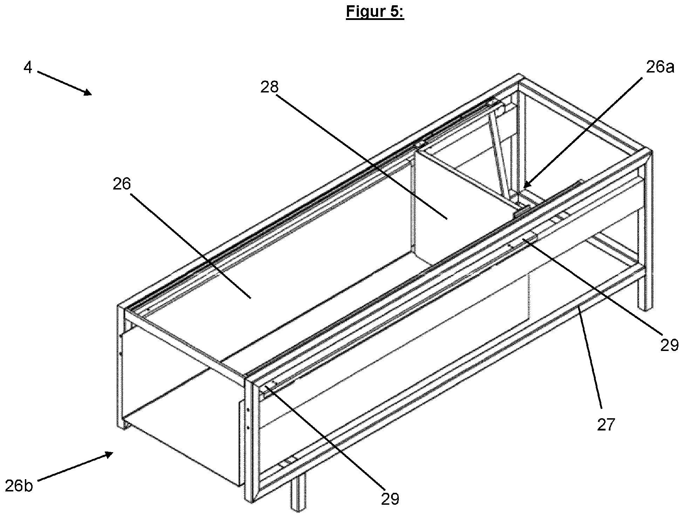

Die Wiegeeinrichtung 4 (Fig. 1,2,4,5) weist eine U-förmige Wanne 26 mit einem ersten und einem zweiten Wannenende 26a;b, ein Gestell 27 sowie ein Räumschild 28 auf. Das Gestell 27 ist auf dem Boden aufgestellt und die Wanne 26 ist mittels vier Wägezellen 29, die mit der Steuereinrichtung 11 verbunden sind, an dem Gestell 27 aufgehängt.

Das Stroh 22 wird nun mittels der Fräswalze 24 portionsweise in die Wanne 26 befördert und in dieser abgewogen. Das vertikale Räumschild 28 ist dabei an dem ersten, der Fräswalze 24 zugewandten Wannenende 26a angeordnet und schließt die Wanne 26 ab.

Insbesondere wird so lange portionsweise Stroh 22 in die Wanne 26 gefördert, bis die gewünschte Menge an Stroh 22 erreicht ist. Diese liegt vorzugsweise bei 2,0 bis 10,0 kg, bevorzugt 2,1 bis 4,2 kg.

Ist die gewünschte Strohmenge erreicht, wird die Fräswalze 24 angehalten und die abgewogene Strohportion mittels des Räumschilds 28 aus der Wanne 26 herausgeschoben. Dazu wird das Räumschild 28 vom ersten Wannenende 26 zum zweiten Wannenende 26b verfahren und das Stroh 22 dadurch am zweiten Wannenende 26a aus der Wanne 26 herausgeschoben und in die Rüttelrinne 5 hinein gefördert.

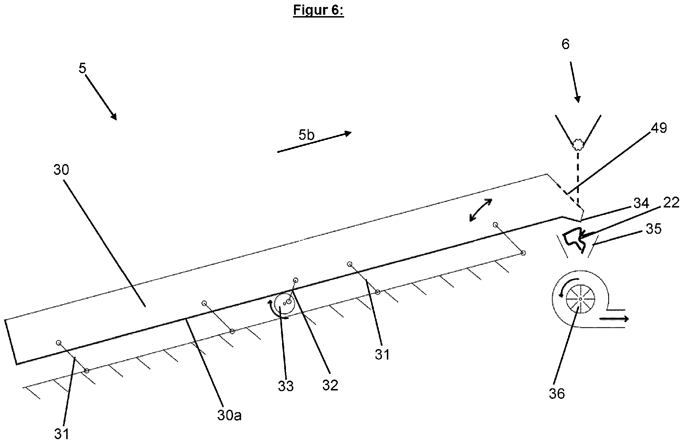

Die Rüttelrinne 5 (Fig. 1,2,6) weist eine U-förmige Rinnenwandung 30 auf, die mittels Wurfarmen 31 am Boden befestigt ist. Zudem weist die Rüttelrinne 5 ein erstes, unteres, der Wiegeeinrichtung 4 zugewandtes, Rinnenende 5a und ein zweites, oberes Rinnenende 5b auf. Die Rüttelrinne 5 ist also vorzugsweise nicht horizontal, sondern ansteigend ausgebildet. Sie fördert das Stroh 22 von unten nach oben, vom unteren Rinnenende 5a zum oberen Rinnenende 5b.

Um die Rüttelbewegung bzw. Wippbewegung der Rinnenwandung 30 zu realisieren, ist die Rinnenwandung 30 mittels der Wurfarme 31 am Boden befestigt. Die Wurfarme 31 sind hierzu einendig um eine horizontale Achse drehbar am Boden und andernendig um eine horizontale Achse drehbar an der Rinnenwandung 30 befestigt. Zudem weist die Rüttelrinne 5 mindestens einen Antriebsarm 32, vorzugsweise zwei Antriebsarme 32 auf jeder Seite, auf. Der Antriebsarm 32 ist jeweils einendig an der Rinnenwandung 30 und andernendig exzentrisch an einer Antriebsscheibe 33 befestigt, welche wiederum mit einem Antriebsmotor drehbar antreibbar in Verbindung steht.

Die Förderung des Strohs 22 erfolgt dabei in an sich bekannter Weise durch die Rüttelbewegung bzw. Wippbewegung der Rüttelrinne 5. Dadurch wird das Stroh 22 einerseits in regelmäßigen Abständen nach vorne, in eine Rinnenförderrichtung 5b, geworfen und dabei gleichzeitig homogenisiert. Diese Homogenisierung ist wichtig, um einen konstanten Massenstrom des Strohs 22 zu erreichen, welches zuvor beim Abwiegen portioniert wurde. Infolgedessen dient die Rüttelrinne 5 zur Förderung des Strohs 22 und zur Homogenisierung des Massenstroms des Strohs 22. Sie wird aus diesem Grund auch kontinuierlich betrieben.

Am oberen Rinnenende 5b erfolgt nun gemäß einem vorteilhaften Aspekt der Erfindung die Zudosierung von Kalkhydratstaub zu dem Stroh 22. Hierzu ist die Kalkhydrat-Zuführeinrichtung 6 am oberen Rinnenende 5b oberhalb der Rinnenwandung 30 angeordnet.

Zudem weist die Rinnenwandung 30 am oberen Rinnenende 5 eine Abwurfkante 34 auf, von der das Stroh 22 herunterfällt. Bevorzugt weist ein Rinnenboden 30a der Rinnenwandung 30 am oberen Rinnenende 5b einen nach unten abknickenden Verlauf auf, so dass das Stroh 22 leichter aus der Rinnenwandung 30 heraus fällt.

Der Rinnenboden 30a weist zudem vorzugweise innenseitig eine rutschhemmende, bevorzugt sandige, Bodenoberfläche auf, um das leichte und glatte Stroh 22 durch die Wurfbewegung transportieren zu können.

**Das Stroh** 22 fällt von der Rinnenwandung 30 in einen Auffangtrichter 35 eines Radialgebläses 36, welcher am Anfang des weiteren Förderkanals 7 angeordnet ist.

Die Kalkhydrat-Zuführeinrichtung 6 dient, wie bereits erläutert, zur Zudosierung von sehr feinem, staubförmigem Kalkhydrat (Ca(OH)₂). Insbesondere weist das Kalkhydrat eine Korngröße von ≤ 100µm, bevorzugt ≤ 90µm, gemäß DIN EN 459-1:2015-07 auf. Das Kalkhydrat dient zur Einstellung bestimmter Eigenschaften der herzustellenden Strohdämmplatten 12.

Unter anderem kann der pH-Wert und die Färbung der Strohdämmplatten 12 beeinflusst werden. Zusätzlich verstärkt das Kalkhydrat die Bindeeigenschaften des Bindemittels und beeinflusst die Oberflächenhärte der Strohdämmplatten 12.

Dazu ist eine sehr genaue Dosierung des Kalkhydrats notwendig.

Problematisch bei der Dosierung ist, dass das sehr feine Kalkhydrat bei leichter Verdichtung sehr zum Verklumpen und zur Brückenbildung neigt. Infolgedessen weist die Kalkhydrat-Zuführeinrichtung 6 vorzugsweise eine spezielle Ausführungsform auf:

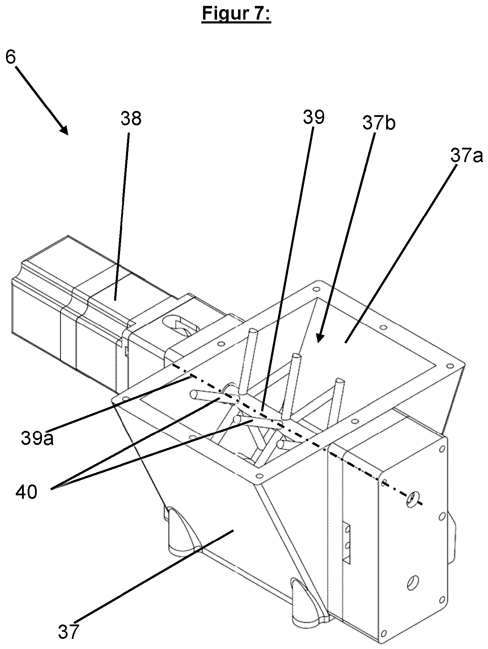

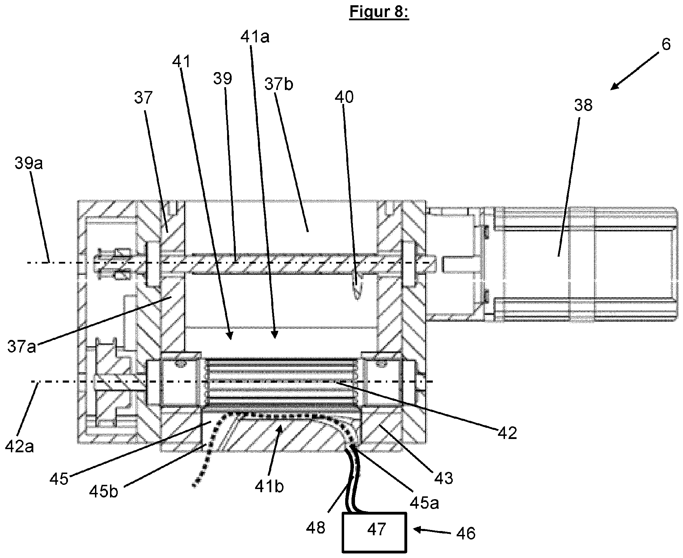

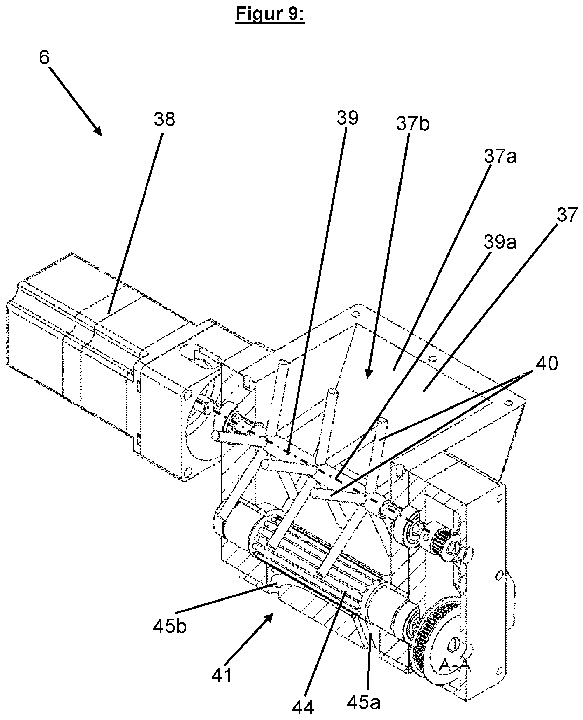

Die Kalkhydrat-Zuführeinrichtung 6 (Fig. 1,2,7,8,9) weist einen Vorratsbehälter 37 zur Aufnahme des Kalkhydrats, einen Antriebsmotor 38, eine Mischerwelle 39 mit Mischerstäben 40, sowie eine Zellenradschleuse 41 mit einem Ausblasemechanismus bzw. einer Ausblaseinrichtung 46 auf.

Der Vorratsbehälter 37 ist vorzugsweise trichterförmig, sich nach unten verjüngend und nach oben offen ausgebildet. Zudem weist er eine Behälterwandung 37a und einen Behälterinnenraum 37b auf.

Die Mischerwelle 39 erstreckt sich horizontal und durch den Behälterinnenraum 37b hindurch. Sie ist zudem an ihren beiden Enden jeweils um ihre horizontale Mischerwellendrehachse 39a drehbar in der Behälterwandung 37a gelagert. Zudem steht die Mischerwelle 39 um ihre Mischerwellendrehachse 39a drehbar antreibbar mit dem Antriebsmotor 38 in Verbindung. Die Mischerstäbe 40 erstrecken sich in Bezug zur Mischerwellendrehachse 39a in radialer Richtung von der Mischerwelle 39 weg.

Die Mischerwelle 39 mit den Mischerstäben 40 ist oberhalb des Zellenrads 42 angeordnet. Sie dient zur Auflockerung des sich im Vorratsbehälter 37 befindlichen Kalkhydrats und verbessert das Nachrieseln des Kalkhydrats auf das Zellenrad 42.

Bei dem Antriebsmotor 38 handelt es sich vorzugsweise um einen Schrittmotor. Der Schrittmotor gewährleistet eine genaue Drehzahl und somit eine genaue Dosierung des Kalkhydrats. Es kann sich aber auch um einen Servomotor handeln. Außerdem kann es sich um einen Gleichstrommotor oder einen Drehstrommotor handeln. Zudem ist der Antriebsmotor 38 vorzugsweise außenseitig am Vorratsbehälter 37 befestigt.

Die Zellenradschleuse 41 ist wie bereits erläutert unterhalb der Mischerwelle 39 angeordnet. Sie weist ein rotierendes Zellenrad 42, ein Schleusengehäuse 43, einen Schleuseneinlauf 41a und einen Schleusenauslauf 41b auf. der Schleuseneinlauf 41a ist vertikal fluchtend unterhalb der Mischerwelle 39 angeordnet.

Insbesondere ist das Schleusengehäuse 43 Teil der Behälterwandung 37a.

Das Zellenrad 42 weist eine Zellenraddrehachse 42a und mehrere, in Umfangsrichtung zueinander benachbarte Zellen 44 zur Aufnahme des Kalkhydrats auf. Die Zellen 44 sind rillenartig ausgebildet und weisen eine Längserstreckung parallel zur Zellenraddrehachse 42a auf. Die Zellen 44 erstrecken sich in Bezug zur Zellenraddrehachse 42a in radialer Richtung gesehen in das Zellenrad 42 hinein.

Zudem weist eine Zellenwandung der Zellen 44 vorzugsweise einen kreisbogenförmigen, bevorzugt halbkreisförmigen, Querschnitt auf. Insbesondere erstreckt sich der Querschnitt höchstens über 180° bzw. einen Halbkreis. Dadurch wird das Herausfallen des staubförmigen Kalkhydrats aus den Zellen 44 erleichtert. Insbesondere wird das Herausfallen im Vergleich zu Zellen mit einem eckigen, insbesondere dreieckigen Querschnitt erleichtert.

Vorzugsweise weisen die Zellen 44 zudem jeweils ein Volumen von 300 mm³ bis 3000 mm³, bevorzugt 400 mm³ bis 800 mm³, auf.

Das Zellenrad 42 weist vorzugsweise eine Fördermenge von 10.000 mm³/min bis 500.000 mm³/min, bevorzugt 30.000 mm³/min bis 50.000 mm³/min, auf.

Zudem steht das Zellenrad 42 mit dem Antriebsmotor 38 um die Zellenraddrehachse 42a drehbar antreibbar in Verbindung. Vorzugsweise sind das Zellenrad 42 und die Mischerwelle 39 miteinander über einen Riementrieb, Zahnradtrieb, Direktantrieb durch einen zweiten Motor oder dergleichen gekoppelt. Zellenrad 42 und Mischerwelle 39 sind somit, vorzugsweise mechanisch und/oder elektronisch, synchronisiert. Infolgedessen steht das Zellenrad 42 vorzugsweise über die Mischerwelle 39 mit dem Antriebsmotor 38 um die Zellenraddrehachse 42a drehbar antreibbar in Verbindung.

Das Zellenrad 42 ist zudem in an sich bekannter Weise in dem Schleusengehäuse 43 um die Zellenraddrehachse 42a drehbar gelagert.

Jede Zelle 44 nimmt in an sich bekannter Weise unterhalb des Schleuseneinlaufs 41a Kalkhydrat auf und am Schleusenauslauf 41b wird das Kalkhydrat aus der Zelle 44 heraus gefördert. Gemäß einem besonders vorteilhaften Aspekt der Erfindung wird das Kalkhydrat am Schleusenauslauf 41b mittels Druckluft aus der Zelle 44 ausgeblasen.

Wie bereits erläutert, weist die Zellenradschleuse 41 hierzu die Ausblaseinrichtung 46 auf.

Die Ausblaseinrichtung 46 weist eine Druckluftquelle 47 auf, welche vorzugsweise konstant Druckluft bereitstellt. Zudem weist das Schleusengehäuse 43 im Bereich des Schleusenauslaufs 41b einen Ausblaskanal 45 auf. Der Ausblaskanal 45 weist ein Kanaleinlassende 45a und ein Kanalauslassende 45b auf, welche beide an die Umgebung münden. Zudem ist der Ausblaskanal 45 vorzugsweise U-förmig ausgebildet. Die Druckluftquelle 47 ist, beispielsweise mittels eines Schlauchs 48, an das Kanaleinlassende 45a angeschlossen.

Zudem erstreckt sich der Ausblaskanal 45 unterhalb des Zellenrads 42 und parallel zur Zellenraddrehachse 42a von einem zum anderen Ende des Zellenrads 42. Dabei ist der Ausblaskanal 45 zum Zellenrad 42 hin offen. Dadurch steht der Ausblaskanal 45 jeweils mit der Zelle 44 in Verbindung, welche sich in der untersten Position befindet.

Wie bereits erläutert, stellt die Druckluftquelle 47 vorzugsweise konstant Druckluft bereit. Dadurch strömt konstant Druckluft vom Kanaleinlassende 45a zum Kanalauslassende 45b durch den Ausblaskanal 45 durch.

Sobald sich eine Zelle 44 soweit nach unten gedreht hat, dass sie mit dem Ausblaskanal 45 in Verbindung steht, wird die Druckluft nicht nur durch den Ausblaskanal 45, sondern auch durch die mit diesem verbundene Zelle 44 durchgeblasen. Dadurch wird das sich in der Zelle 44 befindliche Kalkhydrat aus der Zelle 44 ausgeblasen. Das Luft-/Kalkhydratgemisch wird dann am Kanalauslassende 45b in die Umgebung ausgeblasen bzw. tritt dort aus dem Schleusengehäuse 43 und der Kalkhydrat-Zuführeinrichtung 6 aus. Es tritt dabei in Form eines Kalkhydrat-Aerosols aus. Das heißt die Kalkhydratpartikel sind in der Luft sehr fein verteilt.

Die Ausblaseinrichtung 46 dient also dazu, das Kalkhydrat zuverlässig aus den Zellen 44 zu entfernen. Der konstant anliegende Luftstrom löst auch Kalkstaubanhaftungen vollständig aus den Zellen 44 und sorgt zudem für einen homogenen Eintrag des Kalkhydrats in das Stroh 22. Im Ausblaskanal 45 werden durch die durch die Druckluft erzeugten Luftwirbel zusätzlich kleine Kalkhydratklümpchen aufgelöst und so pulverförmig und gleichmäßig im Luftstrom ausgetragen. Die Entstehung der Luftwirbel wird unter anderem durch die U-Form des Ausblaskanals 45 begünstigt.

Wie bereits erläutert, ist die Kalkhydrat-Zuführeinrichtung 6 am oberen Rinnenende 5b oberhalb der Rinnenwandung 30 angeordnet. Insbesondere ist das Kanalauslassende 45b derart oberhalb der Rinnenwandung 30 angeordnet, dass das aus dem Kanalauslassende 45b austretende Luft-/Kalkhydratgemisch zu dem sich in der Rüttelrinne 5 befindlichen Stroh 22 zugeführt wird, kurz bevor dieses von der Abwurfkante 34 herunterfällt.

Vorzugsweise weist die Rüttelrinne 5 am oberen Rinnenende 5b zudem eine Lochplatte 49 als Abdeckung auf, damit das Stroh 22 nicht nach oben austritt.

Mittels der Kalkhydrat-Zuführeinrichtung 6 ist also eine sehr genaue, portionsweise und homogene Zudosierung des Kalkhydrats zum Stroh 22 in sehr geringen Mengen möglich.

Wie bereits erläutert, fällt das mit dem Kalkhydrat gemischte Stroh 22 von der Rinnenwandung 30 in den Auffangtrichter 35 des Radialgebläses 36, welcher am Anfang des weiteren Förderkanals 7 angeordnet ist. Mittels des von dem Radialgebläse 36 erzeugten Luftstroms wird sowohl das Kalkhydrat eingesaugt als auch das Stroh 22 durch den weiteren Förderkanal 7 über den Zyklonabscheider 50 zur Mischeinrichtung 8 gefördert.

Vorteil des Radialgebläses 36 ist, dass in diesem längere Halme zerteilt werden. Vorzugsweise weist das Stroh 22 nach dem Radialgebläse 36 eine maximale Halmlänge ≤ 10 cm, bevorzugt eine Halmlänge von 5 bis 7 cm, auf.

Der Zyklonabscheider 50 weist in an sich bekannter Weise einen Zykloneinlass 50a sowie einen oberen Luftauslass 50b und einen unteren Materialauslass 50c auf. Vorzugsweise handelt es sich bei dem Zyklonabscheider 50 um einen Tangentialabscheider.

Des Weiteren weist der Zyklonabscheider 50 eine Zyklonwandung 53, die in an sich bekannter Weise einen kegelförmigen Abschnitt aufweist, und ein Tauchrohr 54 auf.

Des Weiteren kann der Zyklonabscheider 50 eine oder mehrere Zugabestellen 64 aufweisen, an denen weitere trockene oder flüssige Komponenten zu dem Stroh 22 zugegeben werden können. Insbesondere werden die Komponenten eingedüst. Beispielsweise kann es sich bei den Komponenten um Konservierungsmittel, insbesondere Natriumlaurylsulfat, oder andere Zusatzmittel, insbesondere Hydrophierungsmittel, handeln.

Am Zykloneinlass 50a wird das mit dem Kalkhydrat gemischte Stroh 22 mitsamt der Förderluft tangential in den Zyklonabscheider 50 eingeblasen. Im Zyklonabscheider 50 erfolgt dann in an sich bekannter Weise die Trennung zwischen Luft und dem Stroh 22. Durch die kegelförmige Verjüngung nimmt die Drehgeschwindigkeit des Strohs 22 dermaßen zu, dass das Stroh 22 durch die Fliehkraft innen an die Zyklonwandung 53 geschleudert und soweit abgebremst wird, dass es sich aus der Strömung löst und nach unten zum Materialauslass 50c rieselt. Die Luft verlässt den Zyklonabscheider 50 durch das Tauchrohr 54.

Am Materialauslass 50c ist eine Mischer-Zellenradschleuse 52 angeordnet. Diese dient zur Förderung des Strohs 22 vom Zyklonabscheider 50 in die Mischeinrichtung 8.

Hierzu weist die Mischer-Zellenradschleuse 52 ein Schleusengehäuse 55 und ein darin angeordnetes Zellenrad 56 und einen Antriebsmotor (nicht dargestellt) für das Zellenrad 56 auf. Das Zellenrad 56 steht mit dem Antriebsmotor drehbar antreibbar um eine, insbesondere horizontale, Zellenraddrehachse in Verbindung, vorzugsweise mit einer Geschwindigkeit von 200 bis 950 U/min, bevorzugt 350 bis 500 U/min. Durch die relativ hohe Drehgeschwindigkeit wird sichergestellt, dass das Stroh 22 das Zellenrad 56 nicht verstopft. Denn Stroh ist grundsätzlich weniger rieselfähig als anderes Schüttgut.

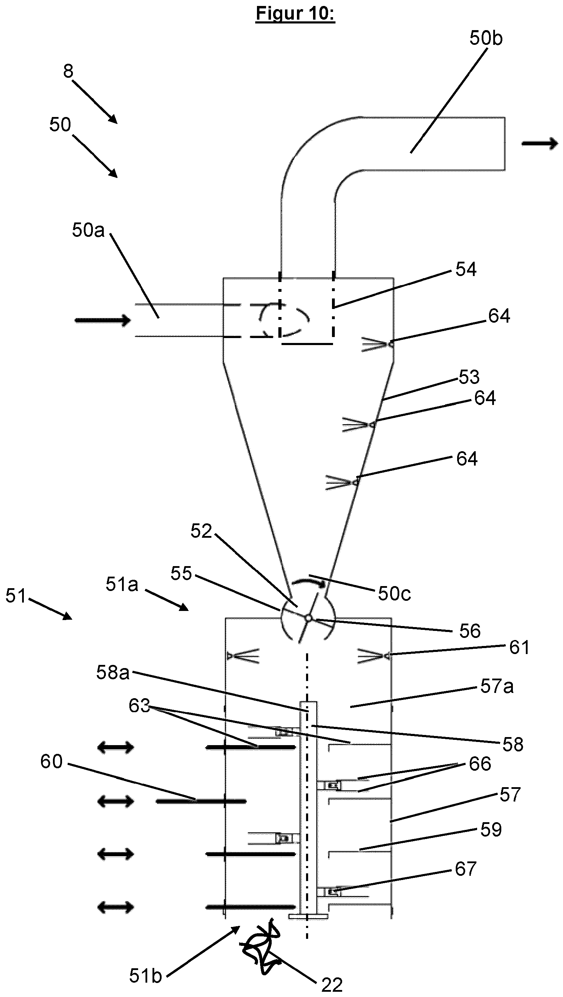

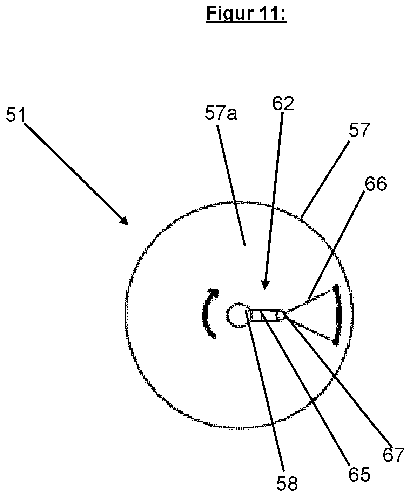

Die Mischeinrichtung 8 (Fig. 1,2,10,11) weist erfindungsgemäß einen Etagenmischer 51 auf.

Der Etagenmischer 51 weist ein oberes Mischereinlassende 51a und ein unteres Mischerauslassende 51b und mehrere, vorzugsweise 3 bis 10, bevorzugt 4 bis 5, übereinander angeordnete Mischkammern 51c auf. Zudem weist der Etagenmischer 51 eine, insbesondere hohlzylindrische, Mischerwandung 57, eine rotierende bzw. drehbar antreibbare Mischerwelle 58, einen Antriebsmotor 100 für die Mischerwelle 58, mehrere feste Zwischenbodenteile 59, mehrere bewegliche Zwischenbodenteile 60 sowie eine Bindemittel-Zugabeeinrichtung 61 und mehrere Mischergabeln 62 auf. Pro Mischkammer 51c weist der Etagenmischer 51 dabei jeweils ein festes Zwischenbodenteil 59 und zwei bewegliche Zwischenbodenteile 60 sowie zumindest eine Mischergabel 62, vorzugsweise zwei bis vier Mischergabeln 62, pro Etage, auf.

Des Weiteren weist der Etagenmischer 51 vorzugsweise ein Mischertraggestell 101 auf.

Die Mischerwandung 57 umgibt einen Mischerinnenraum bzw. Mischraum 57a. Vorzugsweise ist die Mischerwandung 57 zudem am Mischertraggestell 101 gelagert. Zudem ist die Mischerwandung 57 vorzugsweise aus mehreren, jeweils leistenförmigen, in Umfangsrichtung nebeneinander angeordneten Wandungssegmenten 57b ausgebildet. Dies erhöht die Stabilität der Mischerwandung 57.

Vorzugsweise weist die Mischerwandung 57 zudem eine Tür 102 auf.

Die Bindemittel-Zugabeeinrichtung 61 dient zur Zugabe einer wärmehärtenden Bindemittelmischung zum Stroh 22. Dazu ist die Bindemittel-Zugabeeinrichtung 61 vorzugsweise in der obersten Mischkammer 51c, bevorzugt oberhalb des festen Zwischenbodenteils 59, angeordnet.

Vorzugsweise wird die Bindemittelmischung in flüssiger Form zugegeben. Die Bindemittel-Zugabeeinrichtung 61 weist zudem vorzugsweise eine Düse zum Einspritzen der Bindemittelmischung in den Mischerinnenraum 57a auf.

Die flüssige Bindemittelmischung weist vorzugsweise Wasser als Trägersubstanz auf.

Zudem weist die Bindemittelmischung vorzugsweise zumindest ein Protein und/oder Stärke, auf. Das zumindest eine Protein kann tierischen oder pflanzlichen Ursprungs sein. Des Weiteren kann die Bindemittelmischung auch Zusatzstoffe und/oder Zusatzmittel enthalten.

Die Mischerwelle 58 ist innerhalb der Mischerwandung 57 angeordnet. Sie weist eine vertikale Mischerwellendrehachse 58a auf. Zudem steht die Mischerwelle 58 um die Mischerwellendrehachse 58a drehbar antreibbar mit dem Antriebsmotor 100 in Verbindung. Bei dem Antriebsmotor 100 handelt es sich vorzugsweise um einen Asynchronmotor, insbesondere mit Kegelrad- oder Schneckengetriebe. Zudem ist der Antriebsmotor 100 aus Platzgründen bevorzugt oberhalb der Mischerwandung 57 angeordnet. Zudem ist der Antriebsmotor 100 so vom austretenden Mischgut räumlich getrennt und ist so durch Beschädigung durch Staub und Aerosol geschützt.

Die Mischergabeln 62 weisen jeweils einen Stiel 65 sowie mindestens zwei davon abstehende Zinken 66 auf. Der Stiel 65 ist jeweils einendig fest an der Mischerwelle 58 befestigt und steht in radialer Richtung in Bezug zur Mischerwellendrehachse 58a von dieser ab. Andernendig schließen sich an den Stiel 65 die Zinken 66 an. Dabei sind die Zinken 66 einer Mischergabel 62 vorzugsweise in vertikaler Richtung übereinander und zueinander fluchtend angeordnet.

Des Weiteren sind die Zinken 66 um eine vertikale Zinkendrehachse 66a auslenkbar an dem Stiel 65 gelagert. In einer nicht ausgelenkten Stellung erstrecken sich die Zinken 66 dabei in radialer Richtung in Bezug zur Mischerwellendrehachse 58a. Sie sind dann also in Verlängerung des Stiels 65 angeordnet. Und von der nicht ausgelenkten Stellung sind die Zinken 66 beidseits bzw. in zwei Richtungen gegen die Kraft zumindest einer Feder 67 auslenkbar. In der ausgelenkten Stellung bewirkt die zumindest eine Feder 67 somit eine Rückstellkraft auf die Zinken 66 in die nicht ausgelenkte Ausgangsstellung.

Alternativ dazu weisen die Mischergabeln 62 keinen Stiel 65 auf, sondern die beiden Zinken 66 sind über die Feder 67 miteinander verbunden. Und die Feder 67 ist an der fest an der Mischerwelle 58 befestigt. Auch in diesem Fall sind die Zinken 66 beidseits bzw. in zwei Richtungen gegen die Kraft der Feder 67 auslenkbar.

Durch die gefederten Zinken 66 werden Materialanhäufungen vermieden. Denn es wurde im Rahmen der Erfindung festgestellt, dass das mit der Bindemittelmischung benetzte Stroh 22 zu Verklumpung neigt. Es kommt im schlimmsten Fall zu Verstopfung und Blockaden des Mischersystems. Mit den federnd gelagerten Zinken 66 können Materialanhäufungen gut aufgelöst werden und Kraftspitzen, die zu Beschädigungen im System führen würden, werden vermieden, da die Zinken 66 ausweichen können.

Die festen, horizontalen Zwischenbodenteile 59 sind vorzugsweise in vertikaler Richtung zueinander benachbart und zueinander fluchtend angeordnet. Zudem weisen die festen, horizontalen Zwischenbodenteile 59 eine Halbmondform auf. Insbesondere sind die festen Zwischenbodenteile 59 mit ihrer kreisbogenförmigen, konvexen Bodenumfangswandung 59a innen an die Mischerwandung 57 angebunden bzw. schließen sich an diese an. Und eine konkave, ebenfalls kreisbogenförmige Bodenumfangswandung 59b ist beabstandet von der Mischerwelle 58 angeordnet. Die festen Zwischenbodenteile 59 sind also fest mit der Mischerwandung 57 verbunden.

Vorzugsweise bestehen die festen, horizontalen Zwischenbodenteile 59 zudem aus Metall, vorzugsweise aus Stahl, bevorzugt aus Edelstahl.

Die beweglichen, horizontalen Zwischenbodenteile 60 sind ebenfalls vorzugsweise in vertikaler Richtung zueinander benachbart angeordnet. Sie sind zudem paarweise angeordnet.

Zudem weisen die beweglichen, horizontalen Zwischenbodenteile 60 jeweils eine kreisbogenförmige, konvexe Bodenumfangswandung 60a, eine gerade Bodenumfangswandung 60b und eine bogenförmige, konvexe, äußere Bodenumfangswandung 60c auf. Der Durchmesser der kreisbogenförmigen, konvexen Bodenumfangswandung 60a entspricht dabei dem Durchmesser der konkaven, kreisbogenförmigen Bodenumfangswandung 59b der festen Zwischenbodenteile 59. Die gerade Bodenumfangswandung 60b weist zudem jeweils eine Mischerwellenaufnahmeaussparung 103 auf.

Vorzugsweise bestehen die beweglichen Zwischenbodenteile 60 zudem aus Metall, vorzugsweise aus Stahl, bevorzugt aus nicht rostendem Stahl.

Nach einem Aspekt sind die beweglichen, horizontalen Zwischenbodenteile 60 zudem, vorzugsweise in eine zur Mischerwellendrehachse 58a senkrechte Richtung, in den Mischerinnenraum 57a ein- und aus diesem ausfahrbar.

Hierzu sind die beweglichen, horizontalen Zwischenbodenteile 60 jeweils um eine vertikale Zwichenbodendrehachse drehbar bzw. scharnierend an Lagerelementen 104 des Mischertraggestells 101 gelagert. Zudem durchgreifen sie jeweils einen Schlitz in der Mischerwandung 57. Des Weiteren stehen die beweglichen, horizontalen Zwischenbodenteile 60 jeweils mit einem Pneumatikzylinder 105 um die Zwischenbodendrehachse hin- und her drehbar antreibbar in Verbindung. Die Pneumatikzylinder 105 stützen sich vorzugsweise einendig am Mischertraggestell 101 und andernendig an dem jeweiligen beweglichen Zwischenbodenteil 60, insbesondere an dessen äußerer Bodenumfangswandung 60c, ab.

Die beiden beweglichen Zwischenbodenteile 60 einer Mischkammer 51c werden beim Ein- und Ausfahren scherenartig aufeinander zu bzw. voneinander wegbewegt.

In einer eingefahrenen Stellung sind die beweglichen, horizontalen Zwischenbodenteile 60 dabei ebenfalls in vertikaler Richtung zueinander fluchtend angeordnet.

Zudem sind die beiden beweglichen Zwischenbodenteile 60 einer Mischkammer 51c jeweils in horizontaler Richtung benachbart und fluchtend zu einem festen Zwischenbodenteil 59 angeordnet. Insbesondere sind die Zwischenbodenteile 59;60 derart angeordnet, dass sie jeweils einen durchgehenden, horizontalen Zwischenboden 63 bilden, wenn die beiden beweglichen Zwischenbodenteile 60 in ihrer eingefahrenen Stellung sind.

Dazu liegen insbesondere die kreisbogenförmigen, konvexen Bodenumfangswandungen 60a der beiden beweglichen Zwischenbodenteile 60 formschlüssig an der konkaven, kreisbogenförmigen Bodenumfangswandung 59b des festen Zwischenbodenteils 59 an. Außerdem liegen die beiden gerade Bodenumfangswandungen 60b der beiden beweglichen Zwischenbodenteile 60 ebenfalls aneinander an. Und die Mischerwelle 39 ist innerhalb der beiden Mischerwellenaufnahmeaussparungen 103 angeordnet.

Dadurch bleibt das sich auf dem Zwischenboden 63 befindliche Stroh 22 auf dem Zwischenboden 63 in der jeweiligen Mischkammer 51c liegen und wird mittels jeweils mindestens einer Mischergabel 62, vorzugsweise mit zwei bis vier Mischergabeln 62, gemischt.

Die Zwischenböden 63 trennen jeweils die einzelnen Mischkammern 51c voneinander.

Nachdem das Stroh 22 für eine bestimmte Zeit, insbesondere für 30 bis 120 s, bevorzugt 35 bis 60 s, in einer Mischkammer 51c gemischt wurde, werden die beiden beweglichen Zwischenbodenteile 60 aus dem Mischerinnenraum 57a herausgefahren. Dadurch fällt das Stroh 22 auf den Zwischenboden 63 der darunter liegenden Mischkammer 51c. Dieser Prozess wird solange wiederholt, bis das Stroh 22 am Mischerauslassende 51b angekommen ist. Am Mischerauslassende 51b fällt das durchmischte Stroh 22 dann aus dem Etagenmischer 51 heraus und insbesondere in einen weiteren Förderkanal 9 hinein, durch den das Stroh 22 zur Dämmplattenpresseinrichtung 10 befördert wird.

Zudem dauern der Öffnungsvorgang und der Schließvorgang vorzugsweise jeweils 2 bis 4 s und die beweglichen Zwischenböden 60 bleiben vorzugsweise für 8 bis 12 s in ihrer geöffneten Position.

Wie bereits erläutert, wurde im Rahmen der Erfindung festgestellt, dass das mit Bindemittelmischung benetzte Stroh 22 zu Verklumpung und Verstopfungen beim Mischen neigt. Vorteil des Etagenmischers 51 ist nun, dass der Massenstrom des Strohs 22 durch die Mischkammern 51c zerlegt wird. Dennoch ist der Mischprozess ein im Wesentlichen kontinuierlicher Prozess. Der Mischraum wird in einzelne, übereinander liegende Mischkammern 51c aufgeteilt. Und mittels der beweglichen Zwischenbodenteile 60 wird das Weiterfördern des Strohs 22 geregelt, indem die Öffnungszeiten der Zwischenbodenteile 60 entsprechend geregelt werden. So wird ein Überfüllen der einzelnen Mischkammern 51c verhindert. Mit dieser erzwungenen Zerlegung des Massenstroms und genauso erzwungenen Verweildauer des Mischguts in den einzelnen Mischkammern 51c, wird eine hohe Mischgüte erreicht.

Wie bereits erläutert wird gemischte Stroh 22 durch den Förderkanal 9 zur Dämmplattenpresseinrichtung 10 befördert.

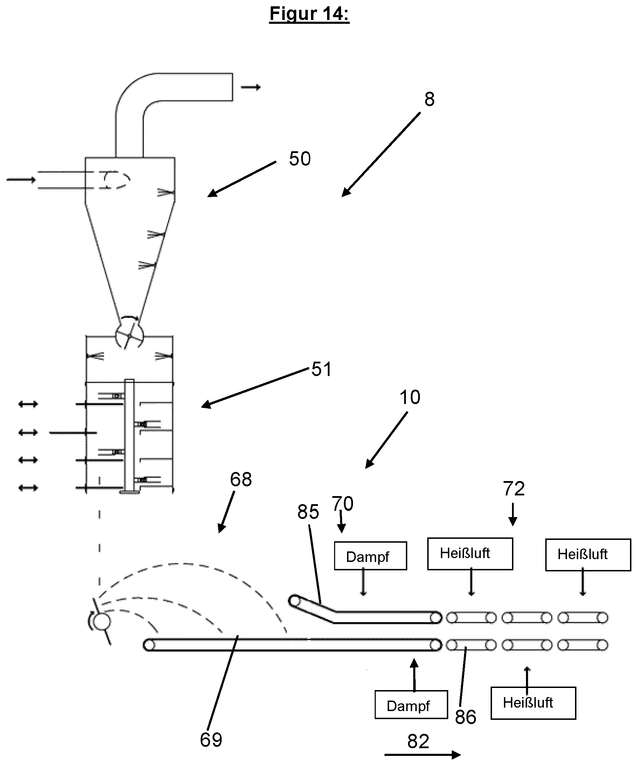

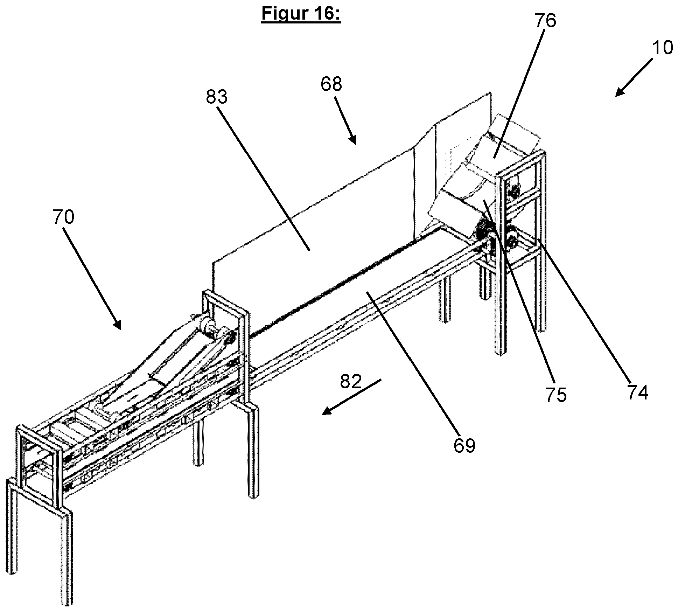

Die Dämmplattenpresseinrichtung 10 (Fig. 1,14-16) weist vorzugsweise eine Wurfeinrichtung 68, ein Förderband 69, eine Verdichtungs- und Bindemittelaktivierungseinrichtung 70, eine Trocknungseinrichtung 72 und eine Schneideinrichtung 73 auf. Zudem weist die kontinuierliche Dämmplattenpresseinrichtung 10 vorzugsweise ein Grundgestell 74 auf.

Die Wurfeinrichtung 68 dient dazu, das aus dem Förderkanal 9 ankommende Stroh 22 auf das Förderband 69 zu werfen bzw. zu schleudern. Dazu ist ein Kanalauslassende des Förderkanals 9 über der Wurfeinrichtung 68 angeordnet, so dass das Stroh 22 aus dem Förderkanal 9 in die Wurfeinrichtung 68 hinein fällt.

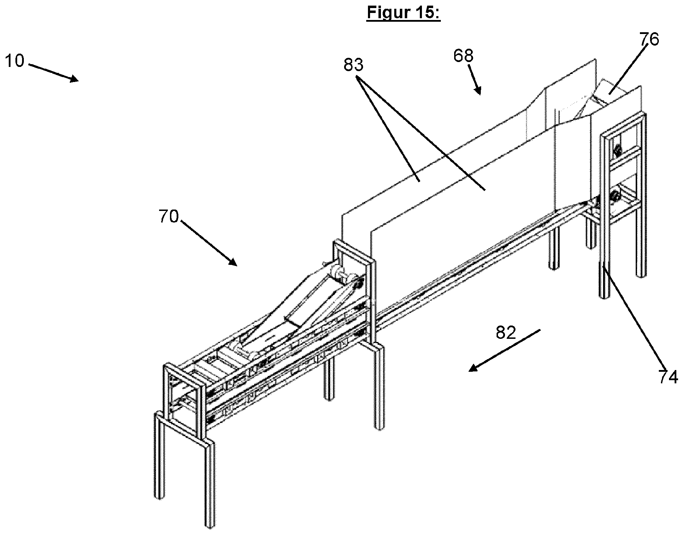

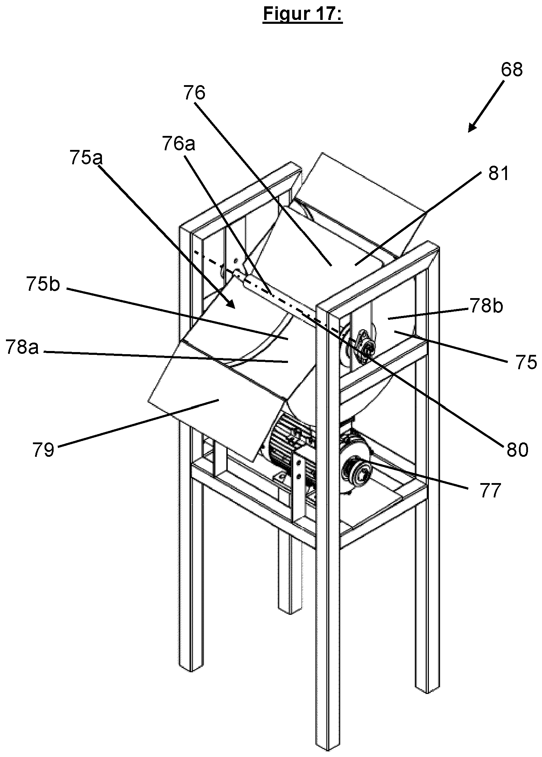

Die Wurfeinrichtung 68 (Fig. 15-17) weist einen Auffangbehälter 75, eine um eine Schaufeldrehachse 76a rotierende Schaufel 76 sowie einen Antriebsmotor 77 zum Antrieb der Schaufel 76 auf.

Der Auffangbehälter 75 ist insbesondere am Grundgestell 74 gelagert. Zudem weist der Auffangbehälter 75 eine gebogene Behälterwandung 78a und zwei sich daran anschließende Behälterseitenwandungen 78b auf. Die beiden Behälterseitenwandungen 78b sind in Richtung der Schaufeldrehachse 76a gesehen gegenüberliegend angeordnet. Und die gebogene Behälterwandung 78a ist vorzugsweise rotationssymmetrisch zur Schaufeldrehachse 76a ausgebildet. Die gebogene Behälterwandung 78a ist somit als Zylindermantelabschnitt ausgebildet. Dabei ist der Auffangbehälter 75 nach oben offen und weist eine Behälteröffnung 75a auf. Der Auffangbehälter 75 ist somit als Auffangschale ausgebildet. Die beiden Behälterseitenwandungen 78b und die gebogene Behälterwandung 78a umgeben einen Behälterinnenraum 75b.

Vorzugsweise weist die Wurfeinrichtung 68 zudem zwei Schutzplatten 79 auf, die sich jeweils an eine Endkante der gebogenen Behälterwandung 78a anschließen und von dieser nach außen abstehen. Die Schutzplatten 79 dienen insbesondere dazu, dass kein Stroh in den Antriebsmotor 77 fällt.

Die Schaufel 76 weist eine, vorzugsweise hohlzylindrische, Schaufelwelle 80 und ein einziges Schaufelblatt 81 auf. Es können aber auch mehrere Schaufelblätter 81 vorhanden sein, ein einziges ist aber bevorzugt. Die Schaufelwelle 80 ist rotationssymmetrisch zur Schaufeldrehachse 76a ausgebildet. Das Schaufelblatt 81 steht in radialer Richtung in Bezug zur Schaufeldrehachse 76a gesehen von der Schaufelwelle 80 ab.

Die Schaufel 76 ist mittels der Schaufelwelle 80 um die Schaufeldrehachse 76a drehbar im Bereich der Behälteröffnung 75a gelagert. Zudem steht die Schaufel 76 mit dem Antriebsmotor 77 um die Schaufeldrehachse 76a drehbar antreibbar in Verbindung, z.B. über einen Riementrieb (nicht dargestellt). Bei dem Antriebsmotor 77 handelt es sich vorzugsweise um einen Drehstrommotor (Asynchronmotor) und/oder einen Servomotor.

Bei der Rotation rotiert die Schaufel 76 dabei teilweise innerhalb des Auffangbehälters 75 und teilweise außerhalb des Auffangbehälters 75. Sie ist dabei so bemessen, dass sie geringfügig von der gebogenen Behälterwandung 78a und den beiden Behälterseitenwandungen 78b beabstandet ist. Mittels der Schaufel 76 wird somit das sich im Behälterinnenraum 75b befindliche Stroh 22 ausgeräumt.

Das Förderband 69 bewegt sich in eine horizontale Förderrichtung 82. Die Förderrichtung 82 ist senkrecht zur Schaufeldrehachse 76a.

Das Förderband 69 ist am Grundgestell 74 gelagert. Zudem sind beidseits des Förderbands 69, insbesondere vertikale, Seitenwände 83 vorhanden. Diese sind ebenfalls am Grundgestellt 74 gelagert. Die beiden Seitenwände liegen sich in eine zur Schaufeldrehachse 76a parallele Richtung gegenüber. Sie erstrecken sich zudem auch bis hin zur Wurfeinrichtung 68 und schirmen diese seitlich ab.

Wie bereits erläutert, fällt das Stroh 22 aus dem Förderkanal 9 herunter in die Wurfeinrichtung 68 hinein. Insbesondere fällt es in den Auffangbehälter 75 hinein und auf das rotierende Schaufelblatt 81 drauf. Dadurch wird das Stroh 22 von dem Schaufelblatt 81 erfasst und parabelförmig auf das Förderband 69 geworfen. Dort legt es sich insbesondere gemäß Gauß'scher Normalverteilung ab. Damit ergibt sich eine gleichmäßig hohe, kontinuierliche bzw. endlose Strohschicht auf dem Förderband 69. Durch diesen Homogenisierungsprozess wird eine gleichmäßige Dichteverteilung der Strohschicht in die Förderrichtung 82 gewährleistet und die einzelnen Strohportionen, die aus der Mischeinrichtung 8 kommen, zu einem gleichmäßigen Massenstrom umgewandelt.

Die konstante Dichteverteilung quer zur Förderrichtung 82 wird insbesondere über die beiden Seitenwände 83 realisiert. Von den Seitenwänden 83 werden die ansonsten im äußeren Randbereich abgelegten Strohhalme aufgefangen und auf den flacheren Randbereich des Mischguts "aufaddiert", sodass sich auch über den Querschnitt eine homogene Dichteverteilung ergibt.

Die sich auf dem Förderband 69 befindende kontinuierliche Strohschicht wird dann mittels des Förderbands 69 in die Verdichtungs- und Aktivierungseinrichtung 70 befördert.

Die Verdichtungs- und Aktivierungseinrichtung 70 weist ein umlaufend angetriebenes Pressband 85 auf, welches oberhalb des Förderbands 69 angeordnet ist. In Förderrichtung 82 gesehen nimmt der Abstand des Pressbands 85 vom Förderband 69 zunächst ab und ist dann konstant. Zwischen dem Pressband 85 und dem Förderband 69 wird somit ein sich in Förderrichtung 82 verjüngender Trichter gebildet, in dem die Strohschicht immer mehr zu einem endlosen Strohstrang bzw. einer endlosen Strohbahn verdichtet wird. Zudem wird die Strohschicht von dem Förderband 69 und dem Pressband 85 in den Trichter hineingezogen.

Nach der Verdichtung der Strohschicht auf die gewünschte Dicke, erfolgt die thermische Aktivierung der Bindemittelmischung. Hierzu wird der Strohstrang mit Wasserdampf beaufschlagt. Vorzugsweise erfolgt die Beaufschlagung mit Wasserdampf von oben und oben in Förderrichtung 82 abwechselnd. Gegebenenfalls erfolgt zudem von der jeweils vertikal gegenüberliegenden Seite eine Beaufschlagung mit Unterdruck, so dass der Wasserdampf durch den Strohstrang durchgezogen wird. Dadurch wird eine homogene Beaufschlagung des Strohstrangs mit Dampf und eine gleichmäßige thermische Aktivierung der Bindemittelmischung über den gesamten Querschnitt des Strohstrangs erreicht.

Das Förderband 69 und das Pressband 85 sind zudem vorzugsweise als Lochbänder ausgeführt, damit der Dampf durch die Bänder 69;85 in den Strohstrang hineinströmen kann.

Zudem bestehen das Förderband 69 und das Pressband 85 vorzugsweise aus Kunststoff, bevorzugt aus Polypropylen. Dies verhindert ein Anhaften der Bindemittelmischung an dem jeweiligen Band 69;85. Das Förderband 69 und das Pressband 85 können aber auch aus nicht rostendem Stahl bestehen und als Lochband ausgebildet sein. Dies ist bei höheren Plattendichten vorteilhaft.

Nach der Verdichtungs- und Aktivierungseinrichtung 70 wird der verdichtete Strohstrang mittels des Förderbands 69 in die Trocknungseinrichtung 72 gefördert.

Die Trocknung ist insbesondere deshalb vorteilhaft, da der Strohstrang aufgrund des kondensierten Wasserdampfes zur Aktivierung des Bindemittels relativ feucht ist. Dies führt zu einer geringeren Festigkeit und Bindefähigkeit des Bindemittels. Um in angemessener Zeit eine ausreichende Festigkeit zur Weiterverarbeitung, insbesondere zum Schneiden, zu erreichen, wird der Strohstrang getrocknet.

Die Trocknungseinrichtung 72 ist hierzu vorzugsweise als Trocknungskanal ausgebildet.

In der Trocknungseinrichtung 72 wird der Strohstrang in Förderrichtung 82 gesehen wechselseitig, vorzugsweise zunächst von oben, dann von unten und dann nochmals von oben mit Heißluft zum Trocknen beaufschlagt. Somit kann eine gleichmäßige Trocknung über den Querschnitt des Strohstrangs erreicht werden. Vorzugsweise weist die bereit gestellte Heißluft eine Temperatur von 100 bis 120 °C, bevorzugt von 105 bis 115 °C, auf.

Auf der jeweils gegenüberliegenden Seite wird die Heißluft vorzugsweise abgesaugt, um das Durchströmen des Strohstrangs mit der Heißluft in vertikaler Richtung noch zu verbessern.

Die Trocknungseinrichtung 72 weist zudem vorzugsweise mehrere über dem Förderband 69 angeordnete, umlaufend angetriebene Antriebsbänder 86 auf, die für einen gleichmäßigen Transport des Strohstrangs sorgen und diesen in Form halten.

Nach der Trocknungseinrichtung 72 wird der getrocknete Strohstrang mittels des Förderbands 69 in die Schneideinrichtung 73 gefördert.

Die Schneideinrichtung 73 dient zum Schneiden des endlosen Strohstranges in einzelne Strohdämmplatten 12. Hierzu weist die Schneideinrichtung 73 vorzugsweise eine mitlaufende Kreissäge 87 oder eine mitlaufende Bandsäge auf.

Die hergestellten Strohdämmplatten 12 weisen, wie bereits erläutert, eine geringe Dichte und damit gute wärmedämmende Eigenschaften auf.

Vorzugsweise weisen die Strohdämmplatten 12 eine Wärmeleitfähigkeit λ_{D} von 0,038 bis 0,049 W/m·K, bevorzugt von 0,039 bis 0,045 W/m·K, gemäß DIN EN 13171:2015-04, Abs. 4.2.1 auf.

Zudem weisen die Strohdämmplatten 12 vorzugsweise eine Rohdichte von 100 bis 150 kg/m³, bevorzugt, 105 bis 120 kg/m³, gemäß DIN EN 1602:2013-05 auf.

Vorzugsweise werden die Strohdämmplatten 12 als Putzträgerplatten oder Lastverteilungsplatten oder Trittschallplatten oder lediglich zur Wärmedämmung, insbesondere in einem Wärmedämmverbundsystem, verwendet.

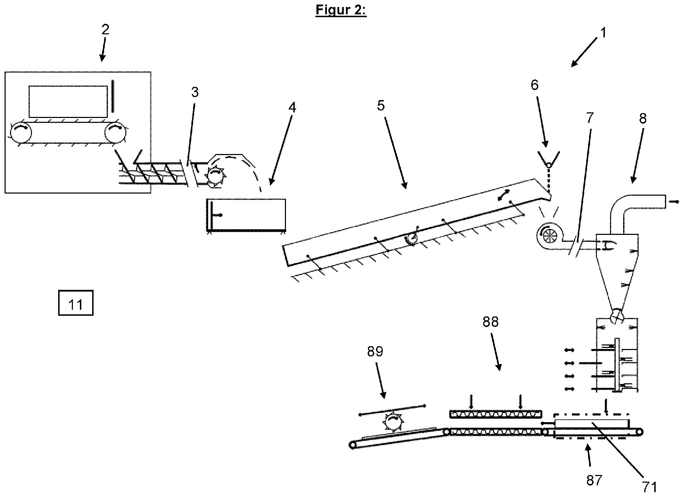

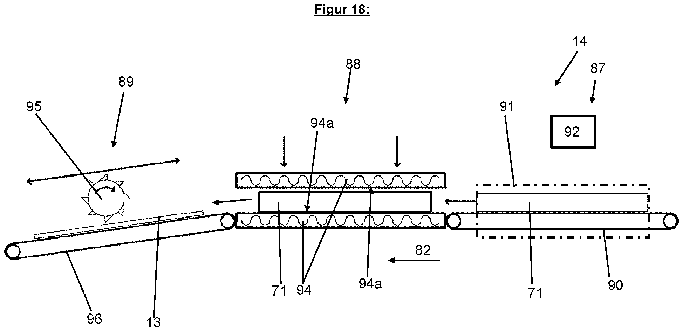

Die erfindungsgemäße Vorrichtung 1 dient gemäß einer weiteren Ausführungsform der Erfindung (Fig. 2,18,19) zur Herstellung von dichten Strohplatten 13.

Die Vorrichtung 1 gemäß der weiteren Ausführungsform unterscheidet sich von der Vorrichtung 1 gemäß der ersten Ausführungsform lediglich dahingehend, dass die Plattenpresseinrichtung 14 anders ausgebildet ist, da eine höhere Verdichtung notwendig ist.

Zudem wird vorzugsweise eine geringe Menge an Bindemittelmischung zugegeben.

Die Presseinrichtung 14 weist in Förderrichtung 82 einander nachgeordnet eine Aufnahmeeinrichtung 87, eine Presse 88 sowie vorzugsweise eine Besäumungseinrichtung 89 auf.

Die Aufnahmeeinrichtung 87 weist ein antreibbares Aufnahmeförderband 90, zwei voneinander in horizontaler Richtung beabstandet angeordnete Begrenzungswände 91 sowie eine Verteileinrichtung 92 auf.

Die Begrenzungswände 91 sind in einer zur Förderrichtung 82 senkrechten Richtung zueinander benachbart und beidseits des Aufnahmeförderbands 90 angeordnet. Sie begrenzen das Aufnahmeförderband 90 somit seitlich.

Das aus der Mischeinrichtung 8 kommende, mit der Bindemittelmischung gemischte Stroh 22 wird nun auf das Aufnahmeförderband 90 aufgebracht. Dies erfolgt beispielsweise indem das Aufnahmeförderband 90 direkt unterhalb der Mischeinrichtung 8 angeordnet ist und das Stroh 22 direkt aus der Mischeinrichtung 8 auf das Aufnahmeförderband 90 fällt.

Alternativ kann das Stroh 22 aber auch anders, z.B. mittels eines Fördermittels, z.B. eines Förderbands oder eines Förderkanals, auf das Aufnahmeförderband 90 aufgebracht werden.

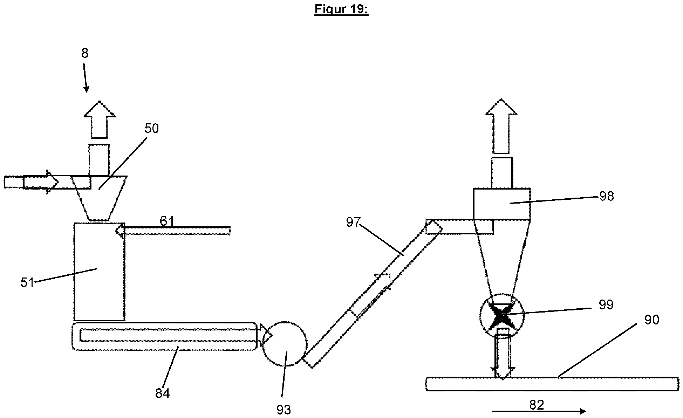

Figur 19 zeigt bevorzugte weitere Förderungsmöglichkeiten. Demnach weist die Vorrichtung 1 nach der Mischeinrichtung 8 eine weitere Rüttelrinne 84, ein sich daran anschließendes Radialgebläse 93, einen sich daran anschließenden Förderkanal 97, und einen sich daran anschließenden Zyklonabscheider 98 auf, welcher am unteren Ende vorzugsweise eine Zellradschleuse 99 aufweist. Die Rüttelrinne 84 ist insbesondere analog wie die erste Rüttelrinne 5 ausgebildet. Das Radialgebläse 93 und der Förderkanal 97 haben den Vorteil, dass die Mischgüte durch den Förderungsprozess der Luftförderung erhalten bleibt.

Der Zyklonabscheider 98 dient zum Abtrennen der Förderluft. Vorzugsweise wird das Stroh 22 zudem von dem Zyklonabscheider 98 mäanderförmig, bevorzugt im Kreuzverbund, auf das Aufnahmeförderband 90 aufgebracht. Hierzu ist der Zyklonabscheider 98 vorzugsweise an einem Portal zwei zueinander senkrechte horizontale Richtungen verfahrbar, wobei eine Richtung parallel zur Förderrichtung 82 ist. Alternativ dazu kann der Zyklonabscheider 98 auch nur senkrecht zur Förderrichtung 82 verfahrbar sein und das Aufnahmeförderband 90 verfährt in Förderrichtung 82 beim Aufbringen des Strohs 22.

Mittels der Verteileinrichtung 92 wird das Stroh 22 dann auf dem Aufnahmeförderband 90 gleichmäßig zu einem Strohkuchen 71 verteilt. Vorzugsweise weist die Verteileinrichtung 92 hierzu ein Portal mit in zwei zueinander senkrechte, horizontale Richtungen hin und her verfahrbaren Verteilerarmen auf.

Sobald das Stroh 22 gleichmäßig verteilt ist, wird nun das Aufnahmeförderband 90 angetrieben und der Strohkuchen 71 mittels des Aufnahmeförderbands 90 in Förderrichtung 82 in die Presse 88 hinein befördert.

Die Presse 88 weist ein unteres, umlaufendes Pressband, bevorzugt mit Trennfolie, sowie zwei übereinander angeordnete, beheizbare Pressplatten 94 und vorzugsweise eine zwischen der oberen Pressplatte 94 und dem Strohkuchen 71 angeordnete Trennfolie auf. Das Pressband läuft um die untere Pressplatte 94 herum. Das Pressband dient zum einen dazu, den Strohkuchen 71 in die Presse 88 hinein zu fördern, wozu es solange angetrieben wird, bis der Strohkuchen 71 seine vorgegebene Stellung zwischen den beiden Pressplatten 94 erreicht hat.

Zum Verpressen des Strohkuchens 71 werden nun die beiden parallelen Pressplatten 94, vorzugsweise hydraulisch, aufeinandergedrückt. Um einen definierten Abstand und somit eine definierte Dicke der herzustellenden Strohplatte 13 zu erreichen, werden die beiden Pressflächen 94a der beiden Pressplatten 94 vorzugsweise von Distanzleisten am Rand der Pressflächen 94a auf Abstand gehalten.

Beim Verpressen ist das Pressband nicht angetrieben und zwischen dem Strohkuchen 71 und der unteren Pressfläche 94a angeordnet. Es bildet dadurch eine temperaturstabile Trennschicht zwischen dem Strohkuchen 71, vor allem dem Bindemittel, und der unteren beheizten Pressplatte 94.

Nach dem Verpressen dient das Pressband zudem dazu, die Strohplatte 13 aus der Presse 88 in Förderrichtung 82 heraus zu fördern in die Besäumungseinrichtung 89 hinein.

In der Besäumungseinrichtung 89 werden die Kanten der Strohplatte 13 besäumt, vorzugsweise mittels einer hin- und her fahrbaren Kreissäge 95. Die Besäumungseinrichtung 89 weist zudem vorzugsweise ein Besäumungseinrichtungsförderband 96 zur Förderung der Strohplatte 13 auf.

Die hergestellten Strohplatten 13 werden dann aus der Besäumungseinrichtung 89 entnommen.

Bei der zweiten Ausführungsform der erfindungsgemäßen Vorrichtung 1 wird die Wärme zur Aktivierung des Bindemittels primär über die, vorzugsweise mittels Thermoöl, beheizten Pressflächen 94a in die Strohschicht eingebracht. Die Pressflächen 94a weisen vorzugsweise eine Temperatur von 100 bis 120 °C, bevorzugt 105 bis 115 °C, auf.

Die Wärmeleitung in das Innere des Strohkuchens 71 ist allerdings auch bei der höheren Verdichtung nicht optimal. Es wird aber davon ausgegangen, dass sich Wasserdampf aus dem Wasseranteil der Bindemittelmischung bildet, welcher durch die Erhöhung des Dampfdrucks in der quasidichten Pressumgebung in die Platten hineingedrückt wird. Dadurch tritt wahrscheinlich derselbe Wärmeübertragungsmechanismus, wie schon zuvor bei der Herstellung der Strohdämmplatten 12 beschrieben, durch Dampfkondensation auf.

Durch die hohe Temperatur, die Einbringung der Wärme durch Kontaktwärme und den geringeren Bindemittelanteil erreichen die hergestellten Strohplatten 13 beim Verlassen der Presse 88 eine sehr gute Oberflächenfestigkeit und Formstabilität. Hier muss zum Erhalten der Form nicht, wie es wiederum bei den Strohdämmplatten 12 vorzugsweise der Fall ist, nachgetrocknet werden. Die Restfeuchte gleicht sich im Wesentlichen innerhalb eines Tages an die Umgebungsluftfeuchte an.

Im Rahmen der Erfindung liegt es dabei zudem auch, mittels der Vorrichtung 1, welche die Presseinrichtung 14 aufweist, Strohdämmplatten 12 herzustellen.

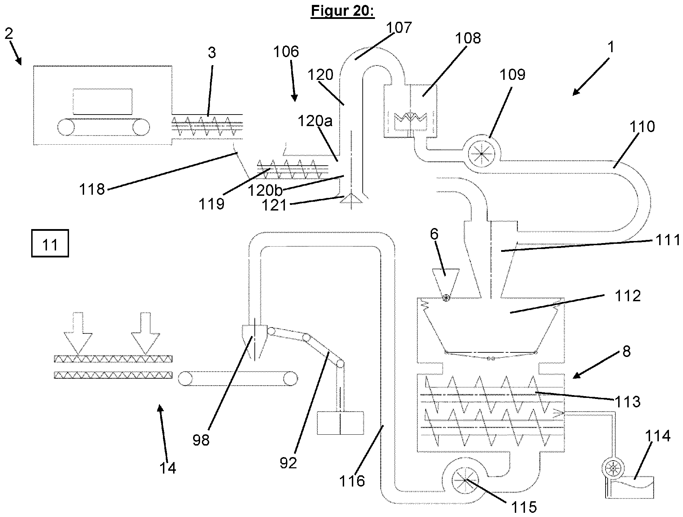

Figur 20 zeigt eine Vorrichtung 1 gemäß der bevorzugtesten Ausführungsform der Erfindung. Die Vorrichtung 1 gemäß der bevorzugtesten Ausführungsform der Erfindung dient ebenfalls zur Herstellung von dichten Strohplatten 13 oder Strohdämmplatten 12.

Die Vorrichtung 1 weist einander nachgeordnet die Strohballenauflösungseinrichtung 2, den Förderkanal 3, eine Homogenisierungsschnecke 106, einen Steinabscheider 107, eine Strohhexe 108, ein Radialgebläse 109, eine Förderstrecke 110, vorzugsweise einen Förderkanal, einen Zyklonabscheider 111, eine Wiegeeinrichtung 112, einen erfindungsgemäßen Schneckenmischer 113, eine Bindemittel-Zugabeeinrichtung 114, ein Radialgebläse 115, eine Förderstrecke 116, vorzugsweise einen Förderkanal, vorzugsweise die Verteileinrichtung 92, sowie die Presseinrichtung 14 und die Steuereinrichtung 11 auf.

Falls die Vorrichtung 1 ausschließlich zur Herstellung von Strohdämmplatten 12 dient, weist sie anstelle der Presseinrichtung 14 die Dämmplattenpresseinrichtung 10 auf (nicht dargestellt).

Die Homogenisierungsschnecke 106 (Fig. 20) schließt sich an den Förderkanal 3 an. Im Gegensatz zu den beiden anderen Ausführungsformen weist der Förderkanal keine Fräswalze 24 auf.

Die Homogenisierungsschnecke 106 weist einen Auffangbehälter 118 sowie eine Homogenisierungsförderschnecke 119 auf. Das Stroh wird durch die Austragsförderschnecke 20 der Strohballenauflösungseinrichtung 2 in den Auffangbehälter 118 gefördert. Der Auffangbehälter 118 weist vorzugsweise mechanischen Füllstandsensoren auf, die den Füllstand erkennen. Mittels der Steuereinrichtung 11 wird auf Basis der Signale der Füllstandsensoren vorzugsweise die Förderleistung der Strohballenauflösungseinrichtung 2 gesteuert.

Durch die Homogenisierungsschnecke 106 wird ein gleichmäßiger und gut luftförderfähiger Strohfluss erreicht. Die Homogenisierungsförderschnecke 119 zieht aus dem Auffangbehälter 118 einen homogenen Strohmassenstrom heraus und fördert das Stroh 22 in den Steinabscheider 107.

Bei dem Steinabscheider 107 (Fig. 20) handelt es sich vorzugsweise um einen Steigrohrsichter. Der Steinabscheider 107 weist vorzugsweise ein aufrechtes, vorzugsweise senkrechtes, Abscheiderrohr 120 auf, das unten offen ist und schwebend aufgehängt ist. Das Abscheiderrohr 120 weist zudem unten eine seitliche Öffnung 120a auf, in die das Stroh 22 von der Homogenisierungsförderschnecke 119 eingefördert wird. Eine untere Öffnung 120b des Abscheiderrohrs 120 schwebt über einem Kegel 121 und ist beabstandet von diesem, wobei der Kegel 121 und das Abscheiderrohr 120 koaxial zueinander sind. Zwischen dem Kegel 121 und dem Abscheiderrohr 120 ist ein Luftspalt vorhanden.

Die für den Transport des Strohs 22 durch den Steinabscheider 107 notwendige Förderluft wird durch das dem Steinabscheider 107 nachgeschaltete Gebläse 115 abgesaugt. Über die Größe des Luftspaltes kann sowohl Luftmenge als auch Strömungsgeschwindigkeit der Förderluft verändert werden. Die Förderluft reißt das eingeförderte Stroh 22 mit nach oben. Andere Partikel, die eine andere Masse bzw. Dichte als das Stroh haben, können von dem Förderluftstrom nicht nach oben gegen die Schwerkraft transportiert werden und fallen nach unten aus dem Abscheiderrohr 120 heraus.

Mittels des Steinabscheiders 107 kann also auf eine einfache und zuverlässige Art und Weise das Stroh 22 von schwereren Partikeln, z.B. Steinen und/oder Dreck und/oder Körnern und/oder Metall getrennt werden. Dies schützt die einzelnen Einrichtungen der erfindungsgemäßen Vorrichtung 1 im weiteren Fertigungsprozess und hebt die Qualität der herzustellenden Platten 12;13 an.

Der Steinabscheider 107 kann in besonders vorteilhafter Weise selbstverständlich auch bei den zuvor beschriebenen Vorrichtungen 1 vorhanden sein.

Wie bereits erläutert wird das Stroh 22 vom Steinabscheider 107 in die Strohhexe 108 eingefördert. Die Strohhexe 108 ist an sich bekannt und dient zum Zerkleinern der Strohhalme auf eine vorbestimmte Halmlänge, vorzugsweise auf eine Halmlänge von 10 mm bis 60 mm, bevorzugt 20 mm bis 40 mm. Dazu weist die Strohhexe in an sich bekannter Weise rotierende Messer auf. Zumindest ein Teil der Strohhalme des Strohs 22 wird zudem aufgespleißt.

Durch die Strohhexe 108 wird das Stroh 22 homogener und zu einem genauer definierten Rohstoff. Dadurch wird die Plattenqualität verbessert und dies unabhängig von der angelieferten Strohschnittqualität. Das geschnittene Stroh 22 weist außerdem eine bessere Luftförderfähigkeit und eine bessere Mischbarkeit auf, da es schüttfähiger wird.

Ein besonderer Vorteil ist zudem, dass die Anhaftung des Bindemittels an den Strohhalmen verbessert wird, da durch das Aufspleißen die Halminnenseiten auch benetzt werden können. Die benetzbare Oberfläche wird also vergrößert.

Durch die erhöhte Anzahl an Kontaktpunkten bei der Verklebung wird auch die Plattenstatik verbessert.

Des Weiteren weisen die Platten 12;13 ein optisch homogeneres Erscheinungsbild auf und die Weiterbearbeitung, insbesondere das Sägen und/oder Fräsen, wird erleichtert.

Die Strohhexe 108 kann in besonders vorteilhafter Weise selbstverständlich auch bei den zuvor beschriebenen Vorrichtungen 1 vorhanden sein.

Von der Strohhexe 108 wird das zerkleinerte Stroh 22 mittels der Förderstrecke 116 zum Zyklonabscheider 111 gefördert. Der Zyklonabscheider 111 dient zur Trennung der Förderluft vom Stroh 22 und zur Befüllung der Wiegeeinrichtung 112.

Die Wiegeeinrichtung 112 (Fig. 20) dient zum portionsweisen Abwiegen des Strohs 22 vor dem sich anschließenden Mischvorgang.

Die Wiegeeinrichtung 112 weist eine Wanne 122 und ein Gestell 123 auf. Die Wanne 122 ist mittels Wägezellen 124, insbesondere Biegestabzellen, die mit der Steuereinrichtung 11 verbunden sind, an dem Gestell 123 aufgehängt.

Die Wanne 122 weist zwei Wannenstirnwandungen 122a, zwei Wannenseitenwandungen 122b, einen Wannendeckel 122c und eine Wannenbodenwandung 122d auf. Die Wannenbodenwandung 122d ist vorzugsweise zweigeteilt ausgebildet und weist zwei Bodenklappen 125 auf, die verschwenkbar an jeweils einer der Wannenseitenwandungen 122b gelagert sind. Insbesondere sind die beiden Wannenbodenteile 125 derart verschwenkbar, dass sie zur Seite wegschwenken bzw. wegklappen können und dazwischen eine Wannenbodenöffnung gebildet wird, durch die das Stroh 22 aus der Wanne 122 herausfallen kann. Zum Verschwenken der beiden Bodenklappen 125 weist die Wanne 122 zudem entsprechende, vorzugsweise elektrische oder pneumatische, Antriebsmittel, vorzugsweise pneumatische Linearzylinder auf. Auch elektrische und pneumatische Schwenkantriebe sind einsetzbar.

Der Wannendeckel 122c weist zudem eine Einfüllöffnung 126 auf, durch die das Stroh 22 in die Wanne 122 eingefüllt wird.

Zum Verschließen der Einfüllöffnung 126 weist die Wiegeeinrichtung 112 einen Absperrschieber bzw. Verschließschieber 127 auf. Der Verschließschieber 127 ist parallel zum Wannendeckel 122c hin- und her verschiebbar von einer die Einfüllöffnung 126 verschließenden in eine die Einfüllöffnung 126 freigebenden Position. Zum Verschwenken des Verschließschiebers 127 weist die Wiegeeinrichtung 112 zudem entsprechende, vorzugsweise elektrische oder pneumatische, Antriebsmittel, vorzugsweise pneumatische Linearzylinder, auf. Zudem ist der Verschließschieber 127 unabhängig von der Wanne 122 am Gestell 123 gelagert.

Zudem weist der Verschließschieber 127 eine Schieberbodenplatte 127a, zwei Schieberseitenwände 127b und eine Schieberrückwand 127c auf.

Vorzugsweise wird zudem das Kalkhydrat in der Wiegeeinrichtung 112 zugegeben. Hierzu weist der Wannendeckel 122c entsprechend eine Kalkeinlassöffnung auf.

Oberhalb der Kalkeinlassöffnung ist die oben beschriebene Kalkhydrat-Zuführeinrichtung 6 angeordnet.

Die Wiegeeinrichtung 112 weist zudem zwei Begrenzungswände 128 auf, die sich von dem Wannendeckel 122c weg erstrecken und die Einfüllöffnung 126 begrenzen. Die beiden Begrenzungswände 128 sind parallel zur Schieberrückwand 127c. Auch die beiden Begrenzungswände 128 sind unabhängig von der Wanne 122 am Gestell 123 gelagert.

In der freigebenden Position ist die Schieberbodenplatte 127a nicht vertikal fluchtend zur Einfüllöffnung 126 angeordnet. Sobald die gewünschte Füllmenge erreicht ist, wird die Ausgangsöffnung des Zyklonabscheiders 111 geschlossen indem der Verschließschieber 127 in die verschließende Position gefahren wird.

In der verschließenden Position ist die Schieberbodenplatte 127a vertikal fluchtend zur Einfüllöffnung 126 angeordnet und schließt diese ab. Zudem bilden die beiden Begrenzungswände 128 und die beiden Schieberseitenwände 127b zusammen mit der Schieberbodenplatte 127a einen nach oben offenen Auffangbehälter 129 für das Stroh 22, was aus dem Zyklonabscheider 111 nach dem Verschließen der Einfüllöffnung 126 nachrieselt. Dadurch wird sichergestellt, dass die Wanne 122 mit einer genau definierten Strohmenge befüllt wird. Diese liegt vorzugsweise bei 2,0 bis 10,0 kg, bevorzugt 2,1 bis 6,0 kg.

Sobald die Einfüllöffnung 126 verschlossen ist, werden die beiden Bodenklappen 125 zur Seite weggeschwenkt und das Stroh 22 fällt durch die gebildete Wannenbodenöffnung in den erfindungsgemäßen Schneckenmischer 113.

Der Schneckenmischer 113 weist einen Mischertrog 130 zur Aufnahme des zu mischenden Materials, mindestens zwei übereinander angeordnete Mischschnecken 131;132 sowie zwei Mischschneckenantriebsmotoren 133;134 auf.

Beide Mischschnecken 131;132 werden jeweils einzeln durch einen, insbesondere elektrischen, Mischschneckenantriebsmotor 133;134 angetrieben. Somit können die Drehzahlen und die eingebrachte Mischenergie genau gesteuert und an das Mischgut angepasst werden.

Der Mischertrog 130 weist zwei sich gegenüberliegende Trogstirnwandungen 130a sowie zwei Trogseitenwandungen 130b und eine Trogbodenwandung auf. Die beiden Tragseitenwandungen 130b laufen in Richtung der Trogbodenwandung gesehen aufeinander zu, so dass sich der Mischertrog 130 nach unten hin verjüngt.

Nach oben hin, wird der Mischertrog 130 durch die Wiegeeinrichtung 112 staubdicht abgeschlossen. Ein Trogdeckel ist somit vorzugsweise nicht vorhanden.

Dadurch wird gewährleistet, dass genügend Raum für das Entspannen des Strohs 22 vorhanden ist. Es wurde nämlich im Rahmen der Erfindung festgestellt, dass ein rohrförmiger Mischerraum zu Verstopfungen beim Mischvorgang führt. Es ist offenbar wichtig, dass sich das Stroh 22 während des Mischvorgangs nach oben entspannen kann und nicht durch eine begrenzende Deckelfläche durch die Mischerschnecken 131;132 verdichtet werden kann. Das Stroh 22 stößt also beim Mischvorgang nicht an die Wannenbodenwandung 122d an.

Wie bereits erläutert weist der Schneckenmischer 113 zudem mindestens zwei übereinander angeordnete Mischschnecken 131;132 auf. Die beiden Mischerschnecken 131;132 weisen jeweils eine Schneckendrehachse 131a;132a, eine Schneckenwelle 131b;132b sowie einen Schneckenflügel bzw. ein Schneckengewinde 131c;132c auf.

Der Schneckenflügel 131c der ersten, insbesondere unteren, Mischschnecke 131 ist dabei aus zwei zueinander gegenläufigen Flügelabschnitten 135a;b ausgebildet. Die beiden Flügelabschnitte 135a;b weisen eine derart gegenläufige Steigung auf, dass die untere Mischschnecke 131 das zu mischende Material zur Mitte des Mischertroges 130 hin bzw. von den beiden Trogstirnwandungen 130a weg fördert.

Im Bereich, in dem sich die beiden gegenläufigen Flügelabschnitte 135a;b treffen, weist zumindest eine der beiden Trogseitenwandungen 130b eine Trogauslassöffnung 136 auf, die mittels eines Abschließschiebers 137 verschließbar ist. Zum Verschieben des Abschließschiebers 137 weist der Mischertrog 130 entsprechende, vorzugsweise elektrische oder pneumatische, Antriebsmittel, vorzugsweise pneumatische Linearzylinder auf.

Zudem weist die erste, insbesondere untere, Mischschnecke 131 in der Mitte der Mischschnecke 131, wo sich die beiden gegenläufigen Flügelabschnitte 135a;b treffen, ein radial angeordnetes Ausförderblech 141 auf.

Der Schneckenflügel 132c der zweiten, insbesondere oberen, Mischschnecke 132 ist ebenfalls aus zwei zueinander gegenläufigen Flügelabschnitten 138a;b ausgebildet. Die beiden Flügelabschnitte 138a;b weisen aber eine derart gegenläufige Steigung auf, dass die obere Mischschnecke 132 das zu mischende Material von der Mitte des Mischertroges 130 weg bzw. zu den beiden Trogstirnwandungen 130a hin fördert.

Da die untere Mischschnecke 131 zur Mitte hin und die obere Mischschnecke 132 von der Mitte weg fördert, bilden sich zwei im Wesentlichen kreisförmige Massenströme, die im unteren Bereich zur Mitte hin gefördert werden und im oberen Bereich wieder auseinandergezogen werden. Dabei werden sie laufend geteilt und wieder zusammengeführt, was ein besonders bevorzugtes Merkmal des Mischprozesses ist.

Des Weiteren weist die zweite, insbesondere obere, Mischschnecke 132, mehrere Zacken 139 auf, die von dem Schneckenflügel 132c in radialer Richtung in Bezug zur Schneckendrehachse 132a gesehen nach außen abstehen. Insbesondre stehen sie von einer Flügelaußenkante 140 des Schneckenflügels 132c ab.

Die Zacken 139 dienen dem Zerteilen von eventuellen Konglomeraten bzw. Anhäufungen währen des Mischvorgangs und zum Auflockern des Mischguts im Allgemeinen.

Die Zacken 139 weisen zudem zwei ineinander übergehende Zackenkanten 139a;b und eine Zackenspitze 139c auf, wobei die Zackenkanten 139a;b vorzugsweise einen stumpfen Winkel miteinander einschließen. Zudem sind die Zacken 139 in eine Umfangsrichtung in Bezug zur Schneckendrehachse 132a gesehen voneinander um 20° bis 90°, bevorzugt 30° bis 45°, beabstandet.

Zudem weisen die Zacken 139 vorzugsweise eine Höhe von 20 mm bis 60 mm, bevorzugt 30 mm bis 40 mm, auf. Die Höhe der Zacken entspricht dem Abstand der Zackenspitze 139c von der Flügelaußenkante 140.

Die Bindemittel-Zugabeeinrichtung 114 dient zur Zugabe der oben beschriebenen flüssigen Bindemittelmischung zum Stroh 22. Vorzugsweise weist der Mischertrog 130 mehrere um die obere Mischschnecke 132 radial herum verteilte Bindemittelzuläufe auf. Dadurch können Bindemittelnester und Verklebungen vermieden werden. Die Bindemittelzuläufe werden von der Bindemittel-Zugabeeinrichtung 114 mit der Bindemittelmischung versorgt. Vorzugsweise wird die Bindemittelmischung ohne Düsen eingefüllt.

Des Weiteren wird die Bindemittelzugabe vorzugsweise erst gestartet, wenn der Mischertrog 130 mit mindestens 20 M.-%, bevorzugt mindestens 30 M.-% der Strohmenge befüllt ist.

Sobald der Mischvorgang abgeschlossen ist, wird, wie bereits erläutert, die Trogauslassöffnung 136 geöffnet und die untere Mischschnecke 131 fördert mit dem Ausförderblech 141 in radialer Richtung das fertig gemischte Mischgut aus dem Schneckenmischer 113. Dies passiert damit sukzessive und gleichmäßig. Zudem kann die Auswurfgeschwindigkeit über die Drehzahl der Mischschnecken 131;132 bestimmt werden. Diese gleichmäßige Ausförderung bildet die Grundlage für weitere Förderung des Mischguts mit Förderluft.

Von dem Schneckenmischer 113 wird mit Bindemittel gemischte Stroh 22 mittels der Förderstrecke 116 zur Verteileinrichtung 92 gefördert.

Vorzugsweise werden die dichten Strohplatten 13 als Trägerplatten, bevorzugt als Putzträgerplatten oder als Heizträgerplatten, oder als Akustikplatten verwendet.

Zudem weisen die dichten Strohplatten 13 vorzugsweise eine Dichte von 200 bis 520 kg/m³, bevorzugt 210 bis 240 kg/m³, besonders bevorzugt 210 bis 230 kg/m³, gemäß DIN EN 1602:2013-05, auf.

Vorzugsweise weisen die dichten Strohplatten 13 außerdem eine Druckfestigkeit von 3,0 bis 4,0 N/mm², bevorzugt von 3,3 bis 3,8 N/mm², gemäß DIN EN ISO 29469:2023-02 auf.

Vorteil der erfindungsgemäßen Vorrichtung 1 ist, dass sie die Herstellung von Strohplatten 12;13 mit hervorragender und gleichmäßiger Qualität gewährleistet. Dies wird insbesondere durch eine gleichmäßige Vermischung des Strohs 22 mit der flüssigen Bindemittelmischung erreicht.

Wie bereits erläutert, ist das gleichmäßige Vermischen des Strohs 22 mit der Bindemittelmischung nicht einfach, da das Stroh 22 dazu neigt, Materialanhäufungen zu bilden und zu verklumpen.

Die Mischergabeln 62 können diese Materialanhäufungen durch die gefederten Zinken 66 gut auflösen und Kraftspitzen, die zu Beschädigungen führen können, werden vermieden.

Zudem wird durch die erfindungsgemäße Aufteilung des Mischraums 57a in die einzelnen vertikal übereinander liegenden Mischkammern 51c und mittels der ein- und ausfahrbaren Zwischenbodenteile 60 das Weiterfördern des Strohs 22 geregelt. So wird ein Überfüllen der einzelnen Mischkammern 51c verhindert. Und mit dieser erzwungenen Zerlegung des Strohmassenstroms und genauso erzwungenen Verweildauer des Strohs 22 in den einzelnen Mischkammern 51c, wird eine hohe Mischgüte erreicht.

In dem Zyklonabscheider 50 wird nämlich das Stroh 22 von der Transportluft getrennt. Hiermit kann gewährleistet werden, dass der Etagenmischer 51 nur mit Strohhalmlängen arbeitet, die sich innerhalb der stabilen Betriebsgrenzen des Etagenmischer 51 befinden.

Des Weiteren ist eine gleichmäßige Aufbringung des mit der Bindemittelmischung gemischten Strohs 22 auf das Förderband 69 der Presseinrichtung 10 wichtig für die Eigenschaften der späteren Strohdämmplatten 12. Insbesondere hat die Legung der einzelnen Strohhalme einen Einfluss auf die Dichteverteilung als auch auf die mechanischen Eigenschaften der Strohdämmplatte 12. Problematisch hierbei ist, dass das Stroh-Bindemittelgemisch weder schütt- noch rieselfähig ist. Es ist deshalb vorteilhaft, wenn es aktiv zerlegt und wieder abgelegt wird, um lokale Dichteunterschiede in der Strohdämmplatte 12 zu vermeiden. Im Rahmen der Erfindung wurde herausgefunden, dass eine lockere, ungerichtete Legung der Strohhalme vorteilhaft ist, so dass durch die anschließende Verdichtung eine bestmögliche Verzahnung der Strohhalme untereinander erfolgt. Trennschichten durch gleichgerichtete Strohhalme, die die mechanischen Eigenschaften der Strohdämmplatten 12 negativ beeinflussen, können dadurch vermieden werden. Insbesondere soll eine Ausrichtung oder Schichtung der Strohhalme vermieden werden, da dies zu Sollbruchstellen in der Strohdämmplatte führen kann.

Wie bereits erläutert, wird die optimale Aufbringung des Strohs 22 auf das Förderband 69 mittels der Wurfeinrichtung 68 erzielt. Durch die rotierende Schaufel 76 werden Nester und Verklumpungen im Stroh-Bindemittelgemisch gleichzeitig aufgelöst und das Stroh-Bindemittelgemisch auf das Förderband 69 geworfen.

Insbesondere wird das Stroh-Bindemittelgemisch parabelförmig auf das laufende Förderband 69 geworfen, wo es sich gemäß Gauß'scher Normalverteilung ablegt. Damit ergibt sich eine gleichmäßig hohe Strohschicht auf dem Förderband 69. Durch diesen Homogenisierungsprozess wird eine gleichmäßige Dichteverteilung der Strohschicht in die Förderrichtung 82 gewährleistet und die einzelnen Strohportionen, die aus der Mischeinrichtung 8 kommen, zu einem gleichmäßigen Massenstrom umgewandelt.

Des Weiteren ist die Aktivierung des Bindemittels bei der Herstellung der Strohdämmplatten 12 mittels Dampf vorteilhaft.

Denn da das Stroh in der Anwendung zur Herstellung von Strohdämmplatten als Isolator eingesetzt wird, ist eine Aktivierung mittels dem üblichen Kontaktwärmeverfahren durch die schlechte Wärmeleitung des Strohs nicht optimal.

Die Verwendung des Wasserdampfes zur Erwärmung ermöglicht hingegen durch verschiedene physikalische Effekte eine effiziente und sehr schnelle Durchheizung der gesamten Strohschicht. Der Wasserdampf kondensiert und gibt die freiwerdende Kondensationsenergie an das Bindemittel ab, wodurch das Bindemittel unmittelbar auf die Aktivierungstemperatur gebracht wird.

Durch den Phasenübergang des Dampfs zur flüssigen Phase entstehen zudem lokale Unterdrücke, die weiteren Dampf nachströmen lassen und somit ein vollständiges, fehlstellenfreies Durchwärmen der gesamten Strohschicht gewährleisten. Somit wird das Bindemittel zuverlässig in jedem Bereich aktiviert. Mit der Einbringung des Dampfs werden zudem die Strohhalme kurzzeitig weich und die Rückfederkräfte sinken. Diese reversible Veränderung des Strohs 22 ermöglicht eine schnellere Formgebung und Entformung des gepressten Strohschichtstranges ohne lange Kalibierstecken, die andernfalls nötig wären, bis die Endfestigkeit des Bindemittels nach dem Trocknen erreicht ist.

Des Weiteren ist es sehr vorteilhaft, das Kalkhydrat getrennt vom Bindemittel zuzugeben. Da das Kalkhydrat nicht mit dem Bindemittel gemischt zugegeben wird, ist es zumindest teilweise frei von Bindemittel und hat mehr freie Oberfläche. Dadurch ist es reaktiver. Die Zugabe von Kalkhydrat zur flüssigen Bindemittelmischung würde zudem die Bindemittelmischung andicken.

Vorteilhaft ist zudem, dass die Herstellung im Wesentlichen erdfeucht erfolgt. Das Stroh 22 ist nur benetzt mit dem Bindemittel und die Strohalme werden nur an den Kontaktstellen miteinander verbunden.

Im Rahmen der Erfindung liegt es dabei auch, die dämmenden Strohplatten 12 mit der Vorrichtung gemäß der zweiten Ausführungsform der Erfindung herzustellen und die dichten Strohplatten 13 mit der Vorrichtung gemäß der ersten Ausführungsform der Erfindung herzustellen, auch wenn es andersherum bevorzugt ist.

Auch ist es selbstverständlich möglich, dass die Vorrichtung 1 mehrere, parallel betriebene Plattenpresseinrichtungen 10;14 aufweist.

Vor allem der Schneckenmischer ist, wie oben beschrieben, sehr vorteilhaft und die bevorzugte Mischeinrichtung. Durch das schnelle Bewegen des Mischguts durch die Mischschnecken im Schneckenmischer wird zudem Luft in das Mischgut eingewirbelt. Vor allem die Zacken auf der oberen Mischschnecke tragen hierzu maßgeblich bei. Dadurch ändert das sonst zu Konglomeraten und Verklumpungen neigende Stroh seine Eigenschaft und verhält sich ähnlich eines Fluids. Damit fließt das Mischgut in oben beschriebenen Strömen im Schneckenmischer und es lässt sich eine hervorragende Mischqualität bei gleichzeitig sehr robuster Bauweise des Mischers erreichen. Die massive Schneckenkonstruktion ist unempfindlich gegen Verstopfungen und Beschädigungen durch verdichtete Faser-Bindemittel-Nester. Es sind nur zwei bewegte Teile am Mischvorgang beteiligt - die beiden Mischschnecken. Durch die leicht zugängliche, aber geschlossene Bauweise des Mischraums und die außenliegenden Motoren ist der Schneckenmischer sehr wartungsunanfällig und gleichzeitig wartungsarm. Der gekapselte Mischraum ist dicht und reduziert den Staubaustritt auf ein Minimum.

Im Rahmen der Erfindung liegt es zudem selbstverständlich, dass die unterschiedlichen Komponenten der verschiedenen Ausführungsformen der Vorrichtungen 1 miteinander kombiniert werden ohne vom Umfang der beigefügten Ansprüche abzuweichen.

Beispielsweise können der Etagenmischer 51 und der Schneckenmischer 113 gegeneinander ausgetauscht werden.

Dies gilt auch für die Rüttelrinne 5 und die Homogenisierungsförderschnecke 119. Es kommt nur darauf an, dass eine Homogenisierungseinrichtung vorhanden ist, welche das Stroh 22 homogenisiert, damit es luftförderfähig wird.

Außerdem können der Steinabscheider 107 und/oder die Strohhexe 108 selbstverständlich auch in die Vorrichtungen 1 gemäß Figuren 1 und 2 integriert werden. Sowohl Steinabscheider 107 als auch die Strohhexe 108 müssen dabei immer vor der Mischeinrichtung 8 angeordnet sein.

Des Weiteren ist es besonders vorteilhaft, wenn die Wiegeeinrichtung 4;112 erst kurz vor dem jeweiligen Mischer 51;113 angeordnet ist, vorzugsweise direkt davor. Sie ist dann also auch bei den Ausführungsformen gemäß Figur 1 und 2 vorzugsweise zwischen dem Zyklonabscheider 50 und dem Etagenmischer 51 angeordnet. Denn dadurch wird eine besonders genaue Dosierung und eine genaue Mischung aus Stroh, Bindemittelmischung und Kalkhydrat gewährleistet.

Und insbesondere auch die Kalkhydratzudosierung in der Wiegeeinrichtung 112, also nach der Luftförderung, ist auch für alle Ausführungsformen vorteilhaft, da ansonsten die Gefahr besteht, dass das Kalkhydrat sich aufgrund der Luftförderung wieder vom Stroh 22 trennt.

Die Kalkhydrat-Zuführeinrichtung 6 kann zudem sehr vorteilhaft auch bei der Herstellung von anderen Faserplatten oder Spanplatten zur Zudosierung von Kalkhydrat zu den Fasern, insbesondere dem Stroh, oder den Spänen verwendet werden.

## Patentansprüche

1. Vorrichtung (1) zur Herstellung von Strohplatten (12;13) aufweisend
a) eine Strohballenauflösungseinrichtung (2) zum Auflösen und Auflockern eines Strohballens (15),
b) eine Wiegeeinrichtung (4;112) zum Portionieren einer gewünschten Menge an aufgelockertem Stroh (22),
c) eine Mischeinrichtung (8) zum Mischen des Strohs (22) mit einer flüssigen, wärmehärtenden Bindemittelmischung,
d) eine kontinuierliche Plattenpresseinrichtung (10) zum Verdichten des mit der Bindemittelmischung gemischten Strohs (22) zu einem kontinuierlichen Strohstrang, Aushärten der Bindemittelmischung und Schneiden des Strohstrangs in einzelne Strohplatten (12) oder eine diskontinuierliche Plattenpresseinrichtung (14) zum Pressen des mit der Bindemittelmischung gemischten Strohs (22) zu einzelnen Strohplatten (13) und Aushärten der Bindemittelmischung,
e) eine Steuereinrichtung (11) zur Steuerung des Herstellungsverfahrens,
**dadurch gekennzeichnet, dass**
die Mischeinrichtung (8)
f₁) einen Schneckenmischer (113) mit mindestens zwei übereinander angeordneten Mischschnecken (131;132),
oder
f₂) einen Etagenmischer (51) mit mehreren übereinander angeordneten, vorzugsweise 3 bis 10, bevorzugt 4 bis 5, Mischkammern (51c) aufweist, wobei die Mischkammern (51c) des Etagenmischers (51) durch, insbesondere horizontale, Zwischenböden (63) voneinander getrennt sind, die zumindest teilweise zur jeweils darunterliegenden hin Mischkammer (51c) öffenbar sind.

2. Vorrichtung nach Anspruch 1,
**dadurch gekennzeichnet, dass**
der Schneckenmischer (113) einen Mischertrog (130), die zumindest zwei übereinander angeordneten Mischschnecken (131;132) sowie zumindest einen, vorzugsweise zwei, Mischschneckenantriebsmotoren (133;134) aufweist.

3. Vorrichtung nach Anspruch 1 oder 2,
**dadurch gekennzeichnet, dass**
die beiden Mischschnecken (131;132) jeweils eine Schneckendrehachse (131a;132a), eine Schneckenwelle (131b;132b) sowie einen Schneckenflügel (131c;132c) aufweisen,
wobei vorzugsweise der Schneckenflügel (131c) der unteren Mischschnecke (131) zwei Flügelabschnitte (135a;b) aufweist, die eine derart gegenläufige Steigung aufweisen, dass die untere Mischschnecke (131) das zu mischende Material in einer zur Scheckendrehachse (131a) parallelen Richtung gesehen zur Mitte des Mischertroges (130) hin fördert.

4. Vorrichtung nach Anspruch 3,
**dadurch gekennzeichnet, dass**
der Schneckenflügel (132c) der oberen Mischschnecke (132) zwei zueinander gegenläufige Flügelabschnitten (138a;b) aufweist, die eine derart gegenläufige Steigung aufweisen, dass die obere Mischschnecke (132) das zu mischende Material in einer zur Scheckendrehachse (132a) parallelen Richtung gesehen von der Mitte des Mischertroges (130) weg fördert.

5. Vorrichtung nach Anspruch 3 oder 4,
**dadurch gekennzeichnet, dass**
die obere Mischschnecke (132) mehrere Zacken (139) aufweist, die von dem Schneckenflügel (132c) in radialer Richtung in Bezug zur Schneckendrehachse (132a) gesehen nach außen, vorzugsweise von einer Flügelaußenkante (140) des Schneckenflügels (132c), abstehen.

6. Vorrichtung nach Anspruch 5,
**dadurch gekennzeichnet, dass**
a) die Zacken (139) zwei ineinander übergehende Zackenkanten (139a;b) und eine Zackenspitze (139c) aufweisen, wobei die Zackenkanten (139a;b) vorzugsweise einen stumpfen Winkel miteinander einschließen
und/oder
b) die Zacken (139) in eine Umfangsrichtung in Bezug zur Schneckendrehachse (132a) gesehen voneinander um 20° bis 90°, bevorzugt 30° bis 45°, beabstandet sind,
und/oder
c) die Zacken (139) eine Höhe von 20 mm bis 60 mm, bevorzugt 30 mm bis 40 mm, aufweisen.

7. Vorrichtung nach einem der Ansprüche 3 bis 6,
**dadurch gekennzeichnet, dass**
der Mischertrog (130) in einem Bereich, in dem sich die beiden gegenläufigen Flügelabschnitte (135a;b) der unteren Mischschnecke (131) treffen, eine Trogauslassöffnung (136) aufweist, die mittels eines Abschließschiebers (137) verschließbar und öffenbar ist,
und
vorzugsweise die untere Mischschnecke (131) in der Mitte der Mischschnecke (131), wo sich die beiden gegenläufigen Flügelabschnitte (135a;b) treffen, ein radial angeordnetes Ausförderblech (141) aufweist.

8. Vorrichtung nach einem der Ansprüche bis 1 bis 7,
**dadurch gekennzeichnet, dass**
die Wiegeeinrichtung (112), bevorzugt unmittelbar, vor der Mischeinrichtung (8), insbesondere vor dem Schneckenmischer (113) oder dem Etagenmischer (51), angeordnet ist.

9. Vorrichtung nach Anspruch 1 oder 8,
**dadurch gekennzeichnet, dass**
die Zwischenböden (63) jeweils zumindest einen beweglichen Zwischenbodenteil (60) aufweisen, der mittels Antriebsmitteln aus einem Mischerinnenraum (57a) heraus und in diesen hinein bewegbar ist.

10. Vorrichtung nach Anspruch 9,
**dadurch gekennzeichnet, dass**
a) ein Zwischenboden (63) jeweils zwei bewegliche Zwischenbodenteile (60) aufweist, die mittels Antriebsmitteln aus dem Mischerinnenraum (57a) heraus und in diesen hinein schwenkbar sind, wobei die beiden beweglichen Zwischenbodenteile (60) vorzugsweise scherenartig aufeinander zu und voneinander weg bewegbar sind,
und/oder
b) die Zwischenböden (63) jeweils zumindest einen festen bzw. unbeweglichen Zwischenbodenteil (59) aufweisen,
und/oder
c) die Zwischenböden (63) jeweils unabhängig voneinander öffenbar sind, vorzugsweise die beweglichen Zwischenbodenteile (60) der einzelnen Zwischenböden (63) jeweils unabhängig voneinander bewegbar sind.

11. Vorrichtung nach einem der Ansprüche 1, 8 bis 10,
**dadurch gekennzeichnet, dass**
der Etagenmischer (51) pro Mischkammer (51c) jeweils mindestens eine Mischergabel (62) aufweist, die mindestens zwei Zinken (66) aufweist,
wobei die Mischergabel (62) jeweils einendig fest an einer um eine Mischerwellendrehachse (58a) drehbar antreibbaren Mischerwelle (58) befestigt ist und in radialer Richtung in Bezug zur Mischerwellendrehachse (58a) von dieser absteht, wobei die Zinken (66) einer Mischergabel (62) vorzugsweise in vertikaler Richtung übereinander und zueinander fluchtend angeordnet sind,
wobei vorzugsweise die Zinken (66) eine nicht ausgelenkte Ausgangstellung aufweisen, in der sie sich vorzugsweise in radialer Richtung in Bezug zur Mischerwellendrehachse (58a) erstrecken, und aus der Ausgangstellung um eine, vorzugsweise vertikale, Zinkendrehachse (66a) in zwei gegenläufige Richtungen gegen Federkraft auslenkbar sind.

12. Vorrichtung nach einem der vorhergehenden Ansprüche 1, 8 bis 11,
**dadurch gekennzeichnet, dass**
der Etagenmischer (51) eine Bindemittel-Zugabeeinrichtung (61) zur Zugabe der flüssigen Bindemittelmischung aufweist, wobei die Bindemittel-Zugabeeinrichtung (61) vorzugsweise so angeordnet ist, dass die Zugabe in der obersten Mischkammer (51c), bevorzugt oberhalb eines festen Zwischenbodenteils (59) des Zwischenbodens (63) der obersten Mischkammer (51c), erfolgt.

13. Vorrichtung nach einem der Ansprüche 1 bis 12,
**dadurch gekennzeichnet, dass**
die Vorrichtung (1) eine Kalkhydrat-Zuführeinrichtung (6) zur Zuführung von Kalkhydrat getrennt von der Bindemittelmischung aufweist, wobei
die Kalkhydrat-Zuführeinrichtung (6) einen Vorratsbehälter (37) zur Aufnahme des Kalkhydrats, vorzugsweise eine Mischerwelle (39) mit zumindest einem Mischerstab (40), sowie eine Zellenradschleuse (41) mit einer Ausblaseinrichtung (46) zum Ausblasen des Kalkhydrats aus der Zellenradschleuse (41) und einen Antriebsmotor (38) zum Antrieb der Zellenradschleuse (41) aufweist.

14. Vorrichtung nach Anspruch 13
**dadurch gekennzeichnet, dass**
a) die Mischerwelle (39) um eine Mischerwellendrehachse (39a) drehbar antreibbar mit dem Antriebsmotor (38) in Verbindung steht und/oder oberhalb der Zellenradschleuse (41) angeordnet ist,
und/oder
b) die Zellenradschleuse (41) ein Zellenrad (42), ein Schleusengehäuse (43), einen Schleuseneinlauf (41a) und einen Schleusenauslauf (41b) aufweist, wobei der Schleuseneinlauf (41a) vorzugsweise vertikal fluchtend unterhalb der Mischerwelle (39) angeordnet ist,
wobei vorzugsweise das Zellenrad (42) eine Zellenraddrehachse (42a) und mehrere, in Umfangsrichtung zueinander benachbarte Zellen (44) zur Aufnahme des Kalkhydrats aufweist, wobei die Zellen (44) rillenartig ausgebildet sind und vorzugsweise eine Längserstreckung parallel zur Zellenraddrehachse (42a) aufweisen,
und wobei eine Zellenwandung der Zellen (44) vorzugsweise einen kreisbogenförmigen, bevorzugt halbkreisförmigen Querschnitt aufweist, wobei sich der Querschnitt vorzugsweise höchstens über 180° erstreckt.

15. Vorrichtung nach Anspruch 14, **dadurch gekennzeichnet, dass**
das Schleusengehäuse (43) im Bereich des Schleusenauslaufs (41b) einen Ausblaskanal (45) aufweist, wobei der Ausblaskanal (45) ein Kanaleinlassende (45a) und ein Kanalauslassende (45b) aufweist, welche beide an die Umgebung münden und wobei die Ausblaseinrichtung (46) eine Druckluftquelle (47) zur insbesondere kontinuierlichen, Bereitstellung von Druckluft aufweist, welche an das Kanaleinlassende (45a) angeschlossen ist, und
wobei der Ausblaskanal (45) derart ausgebildet ist, dass er jeweils mit der sich im Bereich des Schleusenauslaufs (41b) befindlichen Zelle (44) fluidtechnisch in Verbindung steht,
wobei der Ausblaskanal (45) vorzugsweise einen U-förmigen Verlauf aufweist.

16. Vorrichtung nach einem der Ansprüche 1 bis 15,
**dadurch gekennzeichnet, dass**
a) die Vorrichtung (1) zumindest ein Radialgebläse (36;93;109;115) und einen Förderkanal (7;110;116) zur Förderung des Strohs (22) mittels Förderluft aufweist,
und/oder
b) die Vorrichtung (1) einen Steinabscheider (107) zum Trennen des Strohs (22) von schwereren Partikeln, z.B. Steinen und/oder Dreck und/oder Körnern und/oder Metall, aufweist, wobei der Steinabscheider (107) vor der Mischeinrichtung (8) und vorzugsweise vor der Wiegeeinrichtung (112) angeordnet ist,
und/oder
c) die Vorrichtung (1) eine Strohhexe (108) zum zumindest teilweisen Aufspleißen der Strohhalme und zum Zerkleinern auf eine vorbestimmte Halmlänge, vorzugsweise auf eine Halmlänge von 10 mm bis 60 mm, bevorzugt 20 mm bis 40 mm, aufweist, wobei die Strohhexe (108) vor der Mischeinrichtung (8) und vorzugsweise vor der Wiegeeinrichtung (112) angeordnet ist, wobei die Strohhexe (108) zudem vorzugsweise nach dem Steinabscheider (107) angeordnet ist,
und/oder
d) die Vorrichtung (1) eine Homogenisierungseinrichtung zur Homogenisierung des Strohs (22) aufweist, die vorzugsweise direkt der Strohballenauflösungseinrichtung (2) nachgeordnet ist, wobei es sich bei der Homogenisierungseinrichtung vorzugsweise um eine Homogenisierungsschnecke (106), die einen Auffangbehälter (118) sowie eine sich daran anschließende Homogenisierungsförderschnecke (119) aufweist, oder um eine Rüttelrinne (5) handelt.

17. Vorrichtung nach einem der Ansprüche 1 bis 16,
**dadurch gekennzeichnet, dass**
die Presseinrichtung (14) in Förderrichtung (82) einander nachgeordnet eine Aufnahmeeinrichtung (87), eine Presse (88) sowie vorzugsweise eine Besäumungseinrichtung (89) aufweist, wobei die Aufnahmeeinrichtung (87) vorzugsweise ein antreibbares Aufnahmeförderband (90), zwei voneinander in horizontaler Richtung beabstandet angeordnete Begrenzungswände (91) sowie eine Verteileinrichtung (92) aufweist.

18. Vorrichtung nach Anspruch 17,
**dadurch gekennzeichnet, dass**
a) die Presseinrichtung (14) Mittel zum mäanderförmigen Aufbringen, vorzugsweise im Kreuzverbund, des Strohs (22) auf eine Unterlage, vorzugsweise auf das Aufnahmeförderband (90), aufweist,
und/oder
b) die Presse (88) zwei übereinander angeordnete, beheizbare Pressplatten (94) zum Beaufschlagen des mit der wärmehärtenden Bindemittelmischung gemischten Strohs (22) mit Temperatur während des Pressvorgangs aufweist.

19. Vorrichtung nach einem der Ansprüche 1 bis 16 zur Herstellung von Strohdämmplatten (12),
**dadurch gekennzeichnet, dass**
die kontinuierliche Plattenpresseinrichtung eine kontinuierliche Dämmplattenpresseeinrichtung ist, wobei die kontinuierliche Dämmplattenpresseinrichtung (10) ein Förderband (69), eine Wurfeinrichtung (68) zum Werfen des Strohs (22) auf das Förderband (69), eine Verdichtungs- und Bindemittelaktivierungseinrichtung (70) zum Verdichten des mit der Bindemittelmischung gemischten Strohs (22) zu einem kontinu-ierlichen Strohstrang und zum Aushärten der Bindemittelmischung, vorzugsweise eine Trocknungseinrichtung (72) zum Trocknen des Strohstrangs und eine Schneideinrichtung (73) zum Schneiden des Strohstrangs in die einzelne Strohplatten (12) aufweist,
wobei vorzugsweise die Wurfeinrichtung (68) einen Auffangbehälter (75), eine um eine Schaufeldrehachse (76a) drehbar antreibbare Schaufel (76) sowie einen Antriebsmotor (77) zum Antrieb der Schaufel (76) aufweist,
wobei die Schaufel (76) vorzugsweise eine, bevorzugt hohlzylindrische, rotationssymmetrisch zur Schaufeldrehachse (76a) ausgebildete Schaufelwelle (80) und ein einziges Schaufelblatt (81) aufweist, welches in radialer Richtung in Bezug zur Schaufeldrehachse (76a) gesehen von der Schaufelwelle (80) absteht.

20. Vorrichtung nach Anspruch 19,
**dadurch gekennzeichnet, dass**
a) der Auffangbehälter (75) eine gebogene Behälterwandung (78a) und zwei sich daran anschließende Behälterseitenwandungen (78b) aufweist, welche in Richtung der Schaufeldrehachse (76a) gesehen gegenüberliegend angeordnet sind, wobei die gebogene Behälterwandung (78a) vorzugsweise rotationssymmetrisch zur Schaufeldrehachse 76a ausgebildet ist und als Zylindermantelabschnitt ausgebildet ist.
und/oder
b) der Auffangbehälter (75) nach oben offen ausgebildet ist und eine Behälteröffnung (75a) und einen Behälterinnenraum (75b) aufweist,
wobei vorzugsweise durch Rotation der Schaufel (76) mittels der Schaufel (76), insbesondere mittels des Schaufelblatts (81), sich im Behälterinnenraum (75b) befindliches Stroh (22) aus dem Auffangbehälter (75) ausräumbar ist.

21. Vorrichtung nach Anspruch 19 oder 20,
**dadurch gekennzeichnet, dass**
die kontinuierliche Dämmplattenpresseinrichtung (10) beidseits des Förderbands (69), insbesondere vertikale, Seitenwände (83) aufweist, welche sich in eine zur Schaufeldrehachse (76a) parallele Richtung gegenüberliegen und sich vorzugsweise bis hin zur Wurfeinrichtung (68) erstrecken und diese seitlich abschirmen.

22. Verfahren zur Herstellung von Strohplatten (12;13) mittels einer Vorrichtung (1) nach einem der Ansprüche 1 bis 21, mit folgenden Verfahrensschritten:
a) Auflösen und Auflockern eines Strohballens (15),
b) Abwiegen und Portionieren einer gewünschten Menge an aufgelockertem Stroh (22),
c) Mischen des Strohs (22) mit einer flüssigen Bindemittelmischung,
d) Verdichten des mit der Bindemittelmischung gemischten Strohs (22) zu einem kontinuierlichen Strohstrang, Aushärten der Bindemittelmischung und Schneiden des Strohstrangs in einzelne Strohplatten (12) oder, unter gleichzeitigem Aushärten der Bindemittelmischung, Pressen des mit der Bindemittelmischung gemischten Strohs (22) zu einzelnen Strohplatten (13).

23. Verfahren nach Anspruch 22,
**dadurch gekennzeichnet, dass**
a) das Aushärten der Bindemittelmischung durch Beaufschlagung der Bindemittelmischung mit Temperatur erfolgt,
und/oder
b) das Stroh (22) vor dem Mischen mit der Bindemittelmischung zerkleinert und vorzugsweise aufgespleißt wird.

## Claims

1. Device (1) for producing straw plates (12;13), comprising
a) a straw bale dissolving device (2) for dissolving and loosening a straw bale (15),
b) a weighing device (4; 112) for portioning a desired amount of loosened straw (22),
c) a mixing device (8) for mixing the straw (22) with a liquid, heat-curing binder mixture,
d) a continuous plate pressing device (10) for compacting the straw (22) mixed with the binder mixture into a continuous straw strand, curing the binder mixture and cutting the straw strand into individual straw plates (12), or a discontinuous plate pressing device (14) for pressing the straw (22) mixed with the binder mixture into individual straw plates (13) and curing the binder mixture,
e) a control device (11) for controlling the production process,
**characterized in that**
the mixing device (8) comprises
f₁) a screw mixer (113) with at least two mixing screws (131;132) arranged one above the other,
or
f₂) a multi-stage mixer (51) with several, preferably 3 to 10, preferably 4 to 5, mixing chambers (51c) arranged one above the other, wherein the mixing chambers (51c) of the multi-stage mixer (51) are separated from one another by, in particular horizontal, intermediate bottoms (63), which can be opened at least partially towards the mixing chamber (51c) respectively located below.

2. Device according to claim 1,
**characterized in that**
the screw mixer (113) comprises a mixing trough (130), the at least two mixing screws (131;132) arranged one above the other, and at least one, preferably two, mixing screw drive motors (133;134).

3. Device according to claim 1 or 2,
**characterized in that**
the two mixing screws (131; 132) each comprise a screw rotation axis (131a;132a), a screw shaft (131b;132b) and a screw blade (131c;132c), wherein the screw blade (131c) of the lower mixing screw (131) preferably comprises two blade sections (135a;b) which comprise a counter-rotating slope such that the lower mixing screw (131) conveys the material to be mixed, seen in a direction parallel to the screw axis (131a), towards the center of the mixing trough (130).

4. Device according to claim 3,
**characterized in that**
the screw blade (132c) of the upper mixing screw (132) comprises two counter-rotating blade sections (138a;b) that comprise a counter-rotating slope such that the upper mixing screw (132) conveys the material to be mixed away from the center of the mixing trough, seen (130) in a direction parallel to the screw rotation axis (132a).

5. Device according to claim 3 or 4,
**characterized in that**
the upper mixing screw (132) comprises a plurality of spikes (139) which project radially outwards from the screw blade (132c) in relation to the screw rotation axis (132a), preferably from an outer blade edge (140) of the screw blade (132c).

6. Device according to claim 5,
**characterized in that**
a) the spikes (139) comprise two interlocking spike edges (139a;b) and a spike tip (139c), wherein the spike edges (139a;b) preferably form an obtuse angle with each other
and/or
b) the spikes (139) are spaced apart from each other by 20° to 90°, preferably 30° to 45°, when viewed in a circumferential direction relative to the screw rotation axis (132a),
and/or
c) the spikes (139) comprise a height of 20 mm to 60 mm, preferably 30 mm to 40 mm.

7. Device according to one of claims 3 to 6,
**characterized in that**
the mixing trough (130) comprises a trough outlet opening (136) in an area where the two inverse blade sections (135a;b) of the lower mixing screw (131) meet, which can be closed and opened by means of a shutoff slide (137),
and
preferably, the lower mixing screw (131) comprises a radially arranged discharge plate (141) in the center of the mixing screw (131), where the two inverse blade sections (135a;b) meet.

8. Device according to one of claims 1 to 7,
**characterized in that**
the weighing device (112) is, preferably immediately, arranged in front of the mixing device (8), in particular in front of the screw mixer (113) or the multi-stage mixer (51).

9. Device according to claim 1 or 8,
**characterized in that**
the intermediate bottoms (63) each have at least one movable intermediate bottom part (60) which can be moved out of and into a mixer interior (57a) by means of drive means.

10. Device according to claim 9,
**characterized in that**
a) each intermediate bottom (63) comprises two movable intermediate bottom parts (60) which can be pivoted out of and into the mixer interior (57a) by means of drive means, wherein the two movable intermediate bottom parts (60) can preferably be moved towards and away from each other in a scissor-like manner,
and/or
b) the intermediate bottoms (63) each comprise at least one fixed or immovable intermediate bottom part (59),
and/or
c) the intermediate bottoms (63) can each be opened independently of one another, preferably the movable intermediate bottom parts (60) of the individual intermediate bottoms (63) can each be moved independently of one another.

11. Device according to one of claims 1,8 to 10,
**characterized in that**
the multi-stage mixer (51) comprises at least one mixer fork (62) per mixing chamber (51c), which comprises at least two tines (66), wherein the mixer fork (62) is fixed at one end to a mixer shaft (58) that can be rotated about a mixer shaft rotation axis (58a) and protrudes radially from the mixer shaft (58) in relation to the mixer shaft rotation axis (58a), wherein the tines (66) of a mixer fork (62) are preferably arranged vertically one above the other and aligned with each other,
wherein the tines (66) preferably have an undeflected initial position in which they preferably extend in a radial direction relative to the mixer shaft rotation axis (58a) and can be deflected from the initial position about a preferably vertical tine rotation axis (66a) in two opposite directions against spring force.

12. Device according to one of the preceding claims 1, 8 to 11,
**characterized in that**
the multi-stage mixer (51) comprises a binder addition device (61) for adding the liquid binder mixture, wherein the binder addition device (61) is preferably arranged such that the addition takes place in the uppermost mixing chamber (51c), preferably above a fixed intermediate bottom part (59) of the intermediate bottom (63) of the uppermost mixing chamber (51c).

13. Device according to one of claims 1 to 12,
**characterized in that**
the device (1) comprises a hydrated lime feeding device (6) for feeding hydrated lime separately from the binder mixture, wherein
the hydrated lime feeding device (6) comprises a storage container (37) for receiving the hydrated lime, preferably a mixing shaft (39) with at least one mixing rod (40), as well as a rotary valve (41) with a blow-out device (46) for blowing the hydrated lime out of the rotary valve (41) and a drive motor (38) for driving the rotary valve (41).

14. Device according to claim 13,
**characterized in that**
a) the mixing shaft (39) is connected to the drive motor (38) so that it can be driven to rotate about a mixing shaft rotation axis (39a) and/or is arranged above the rotary valve (41),
and/or
b) the rotary valve (41) comprises a rotary valve wheel (42), a valve housing (43), a valve inlet (41a) and a valve outlet (41b), wherein the valve inlet (41a) is preferably arranged vertically aligned below the mixing shaft (39),
wherein the rotary valve disc (42) preferably comprises a rotary valve wheel rotation axis (42a) and a plurality of cells (44) adjacent to one another in the circumferential direction for receiving the hydrated lime, wherein the cells (44) are designed groove-like and preferably comprise a longitudinal extension parallel to the rotary valve wheel rotation axis (42a),
and wherein a cell wall of the cells (44) preferably comprises a circular arc-shaped, preferably semicircular cross-section, wherein the cross-section preferably extends over at most 180°.

15. Device (6) according to claim 14,
**characterized in that**
the valve housing (43) has a blow-out channel (45) in the area of the valve outlet (41b), wherein the blow-out channel (45) comprises a channel inlet end (45a) and a channel outlet end (45b), both of which open into the environment, and wherein the blow-out device (46) comprises a compressed air source (47) for the continuous supply of compressed air, which is connected to the channel inlet end (45a), and
wherein the blow-out channel (45) is designed such that it respectively is in fluid communication with the cell (44) located in the area of the valve outlet (41b),
wherein the blow-out channel (45) preferably has a U-shaped course.

16. Device according to one of claims 1 to 15,
**characterized in that**
a) the device (1) comprises at least one radial fan (36; 93;109;115) and a conveyor channel (7;110;116) for conveying the straw (22) by means of conveyor air,
and/or
b) the device (1) comprises a stone separator (107) for separating the straw (22) from heavier particles, e.g. stones and/or dirt and/or grains and/or metal, wherein the stone separator (107) is arranged before the mixing device (8) and preferably before the weighing device (112),
and/or
c) the device (1) comprises a straw chopper (108) for at least partially splitting the straw stalks and for chopping them to a predetermined stalk length, preferably to a stalk length of 10 mm to 60 mm, preferably 20 mm to 40 mm, wherein the straw chopper (108) is arranged before the mixing device (8) and preferably before the weighing device (112), wherein the straw chopper (108) is also preferably arranged after the stone separator (107),
and/or
d) the device (1) comprises a homogenizing device for homogenizing the straw (22), which is preferably arranged directly after the straw bale dissolving device (2), wherein the homogenizing device is preferably a homogenizing screw (106) which has a collection container (118) and a homogenizing conveyor screw (119) connected thereto, or a vibrating chute (5).

17. Device according to one of claims 1 to 16,
**characterized in that**
the pressing device (14) comprises, arranged one after the other in the conveying direction (82), a receiving device (87), a press (88) and, preferably, a trimming device (89), wherein the receiving device (87) preferably comprises a drivable receiving conveyor belt (90), two boundary walls (91) arranged at a distance from each other in the horizontal direction, and a distribution device (92).

18. Device according to claim 17,
**characterized in that**
a) the pressing device (14) comprises means for applying the straw (22) in a meandering pattern, preferably in a cross-bonded manner, onto a substrate, preferably onto the receiving conveyor belt (90),
and/or
b) the press (88) comprises two heatable press plates (94) arranged one above the other for applying temperature to the straw (22) mixed with the thermosetting binder mixture during the pressing process.

19. Device according to one of claims 1 to 16 for the production of straw insulation boards (12),
**characterized in that**
the continuous plate pressing device is a continuous insulation plate pressing device, wherein the continuous insulation plate pressing device (10) comprises a conveyor belt (69), a throwing device (68) for throwing the straw (22) onto the conveyor belt (69), a compaction and binder activation device (70) for compacting the straw mixed with the binder mixture (22) into a continuous straw strand and for curing the binder mixture, preferably a drying device (72) for drying the straw strand, and a cutting device (73) for cutting the straw strand into the individual straw plates (12),
wherein the throwing device (68) preferably comprises a collecting container (75), a shovel (76) which can be driven to rotate about a shovel rotation axis (76a), and a drive motor (77) for driving the shovel (76),
wherein the shovel (76) preferably comprises a hollow cylindrical shovel shaft (80) formed with rotational symmetry relative to the shovel rotation axis (76a) and a single shovel blade (81) which protrudes from the shovel shaft (80) in the radial direction relative to the shovel rotation axis (76a).

20. Device according to claim 19,
**characterized in that**
a) the collection container (75) comprises a curved container wall (78a) and two adjoining container side walls (78b) which are arranged opposite each other, seen in the direction of the shovel rotation axis (76a), wherein the curved container wall (78a) is preferably designed to be rotationally symmetrical to the shovel rotation axis (76a) and is designed as a cylinder jacket section.
and/or
b) the collection container (75) is open at the top and comprises a container opening (75a) and a container interior (75b),
wherein preferably straw (22) located in the container interior (75b) can be removed from the collection container (75) by rotation of the shovel (76) by means of the shovel(76), in particular by means of the shovel blade (81).

21. Device according to claim 19 or 20,
**characterized in that**
the continuous insulation plate pressing device (10) comprises, in particular vertical, side walls (83) on both sides of the conveyor belt (69), which are opposite each other in a direction parallel to the shovel rotation axis (76a) and preferably extend to the throwing device (68) and shield it laterally.

22. Method for producing straw plates (12;13) using a device (1) according to one of the claims 1 to 21, with the following method steps:
a) Dissolving and loosening a straw bale (15),
b) weighing and portioning a desired amount of loosened straw (22),
c) mixing the straw (22) with a liquid binder mixture,
d) Compacting the straw (22) mixed with the binder mixture into a continuous straw strand, curing the binder mixture and cutting the straw strand into individual straw plates (12) or, while simultaneously curing the binder mixture, pressing the straw (22) mixed with the binder mixture into individual straw plates (13).

23. Method according to claim 22,
**characterized in that**
a) curing of the binder mixture is carried out by applying temperature to the binder mixture,
and/or
b) the straw (22) is comminuted and preferably split before being mixed with the binder mixture.

## Revendications

1. Dispositif (1) pour la fabrication de panneaux de paille (12;13) comprenant
a) un dispositif de démêlage de balles de paille (2) pour démêler et aérer une balle de paille (15),
b) un dispositif de pesage (4;112) pour portionner une quantité souhaitée de paille aérée (22),
c) un dispositif de mélange (8) pour mélanger la paille (22) avec un mélange liant liquide thermodurcissable,
d) un dispositif de pressage de panneaux continu (10) pour compacter la paille (22) mélangée au mélange de liant en un cordon de paille continu, durcir le mélange liant et découper le cordon de paille en panneaux de paille individuels (12) ou un dispositif de pressage de panneaux discontinu (14) pour presser la paille (22) mélangée au mélange liant en panneaux de paille individuels (13) et durcir le mélange liant,
e) un dispositif de commande (11) pour commander le processus de fabrication,
**caractérisé en ce que**
le dispositif de mélange (8) comprend
f₁) un mélangeur à vis (113) avec au moins deux vis mélangeuses (131;132) superposées,
ou
f₂) un mélangeur à étages (51) avec plusieurs, de préférence 3 à 10, de préférence 4 à 5, chambres de mélange (51c) superposées, où les chambres de mélange (51c) du mélangeur à étages (51) sont séparées les unes des autres par des fonds intermédiaires (63), en particulier horizontaux, qui peuvent être ouverts au moins en partie vers la chambre de mélange (51c) située immédiatement en dessous.

2. Dispositif selon la revendication 1,
**caractérisé en ce que**
le mélangeur à vis (113) comprend une cuve de mélange (130), les au moins deux vis de mélange (131;132) disposées l'une au-dessus de l'autre, ainsi qu'au moins un, de préférence deux, moteurs d'entraînement (133;134) de vis.

3. Dispositif selon la revendication 1 ou 2,
**caractérisé en ce que**
les deux vis de mélange (131;132) comprennent chacune un axe de rotation de vis (131a;132a), un arbre de vis (131b;132b) et une ailette de vis (131c;132c),
où l'ailette de vis (131c) de la vis de mélange inférieure (131) comprend de préférence deux sections d'ailette (135a;b) qui comprennent une inclinaison opposée telle que la vis de mélange inférieure (131) transporte le matériau à mélanger dans une direction parallèle à l'axe de rotation de vis (131a) vers le centre de la cuve de mélange(130).

4. Dispositif selon la revendication 3,
**caractérisé en ce que**
l'ailette de vis (132c) de la vis de mélange supérieure (132) comprend deux sections d'ailette opposées (138a;b) qui comprennent une inclinaison opposée telle que la vis de mélange supérieure (132) transporte le matériau à mélanger dans une direction parallèle à l'axe de rotation de vis (132a) loin du centre de la cuve de mélange (130).

5. Dispositif selon la revendication 3 ou 4,
**caractérisé en ce que**
la vis de mélange supérieure (132) comprend plusieurs dents (139) qui rebiquent vers l'extérieur à partir de l'ailette de vis (132c), de préférence à partir d'un bord extérieur d'ailette (140) de l'ailette de vis (132c), dans le sens radial par rapport à l'axe de rotation de vis (132a).

6. Dispositif selon la revendication 5,
**caractérisé en ce que**
a) les dents (139) comprennent deux bords de dent (139a;b) se rejoignant et une pointe de dent (139c), les bords de dent (139a;b) formant de préférence un angle obtus entre eux
et/ou
b) les dents (139) sont espacées les unes des autres de 20° à 90°, de préférence de 30° à 45°, dans une direction circonférentielle par rapport à l'axe de rotation de vis (132a),
et/ou
c) les dents (139) ont une hauteur de 20 mm à 60 mm, de préférence de 30 mm à 40 mm.

7. Dispositif selon l'une des revendications 3 à 6,
**caractérisé en ce que**
la cuve de mélange (130) comprend, dans une zone où se rencontrent les deux sections d'ailettes opposées (135a;b) de la vis de mélange inférieure (131), une ouverture de sortie de cuve (136) qui peut être fermée et ouverte au moyen d'un tiroir de fermeture (137),
et
de préférence, la vis de mélange inférieure (131) comprend, au centre de la vis de mélange (131), là où se rejoignent les deux sections d'ailettes à contra-courantes (135a;b), une tôle d'évacuation (141) disposée radialement.

8. Dispositif selon l'une des revendications 1 à 7,
**caractérisé en ce que**
le dispositif de pesage (112) est disposé de préférence immédiatement avant le dispositif de mélange (8), en particulier avant le mélangeur à vis (113) ou le mélangeur à étages (51).

9. Dispositif selon la revendication 1 ou 8,
**caractérisé en ce que**
les fonds intermédiaires (63) comprennent chacun au moins une partie de fond intermédiaire mobile (60) qui peut être déplacée hors d'un espace intérieur de mélangeur (57a) et dans celui-ci à l'aide de moyens d'entraînement.

10. Dispositif selon la revendication 9,
**caractérisé en ce que**
a) chaque fond intermédiaire (63) comprend deux parties de fond intermédiaire mobiles (60) qui peuvent être pivotées hors de l'espace intérieur de mélangeur (57a) et dans celui-ci à l'aide de moyens d'entraînement, les deux parties de fond intermédiaire mobiles (60) pouvant être déplacées de préférence à la manière de ciseaux l'une vers l'autre et l'une loin de l'autre,
et/ou
b) les fonds intermédiaires (63) comprennent chacun au moins une partie de fond intermédiaire fixe ou immobile (59),
et/ou
c) les fonds intermédiaires (63) peuvent être ouverts indépendamment les uns des autres, de préférence les parties de fond intermédiaires mobiles (60) des différents fonds intermédiaires (63) peuvent être déplacées indépendamment les unes des autres.

11. Dispositif selon l'une des revendications 1 ,8 à 10,
**caractérisé en ce que**
le mélangeur à étages (51) comprend, pour chaque chambre de mélange (51c), au moins une fourche de mélangeur (62) qui comporte au moins deux dents (66), où la fourche de mélangeur (62) est fixée à une extrémité à un arbre de mélangeur (58) pouvant être entraîné en rotation autour d'un axe de rotation d'arbre de mélangeur (58a) et dépasse du arbre de mélangeur (58) dans la direction radiale par rapport à l'axe de rotation d'arbre de mélangeur, où les dents (66) d'une fourche de mélangeur (62) sont de préférence disposées les unes au-dessus des autres dans la direction verticale et alignées les unes par rapport aux autres,
où, de préférence, les dents (66) comprennent une position initiale non déviée dans laquelle elles s'étendent de préférence dans le sens radial par rapport à l'axe de rotation d'arbre de mélangeur (58a) et peuvent être déviées à partir de la position initiale autour d'un, de préférence vertical, axe de rotation des dents (66a) dans deux sens opposés contre la force d'un ressort.

12. Dispositif selon l'une des revendications précédentes 1, 8 à 11,
**caractérisé en ce que**
le mélangeur à étages (51) comprend un dispositif d'ajout de liant (61) pour ajouter le mélange de liant liquide, le dispositif d'ajout de liant (61) étant de préférence disposé de telle sorte que l'ajout s'effectue dans la chambre de mélange supérieure (51c), de préférence au-dessus d'une partie de fond intermédiaire fixe (59) du fond intermédiaire (63) de la chambre de mélange supérieure (51c).

13. Dispositif selon l'une des revendications 1 à 12,
**caractérisé en ce que**
le dispositif (1) comprend un dispositif d'alimentation de chaux hydratée (6) pour alimenter de la chaux hydratée séparément du mélange de liant, où le dispositif d'alimentation de chaux hydratée (6) comprend un réservoir de stockage (37) destiné à recevoir la chaux hydratée, de préférence un arbre de mélangeur (39) avec au moins une tige de mélangeur (40), ainsi qu'une écluse à roue cellulaire (41) avec un dispositif de soufflage (46) pour souffler la chaux hydratée hors de l'écluse à roue cellulaire (41) et un moteur d'entraînement (38) pour entraîner l'écluse à roue cellulaire (41).

14. Dispositif selon la revendication 13,
**caractérisé en ce que**
a) l'arbre de mélangeur (39) est relié au moteur d'entraînement (38) de manière à pouvoir tourner autour d'un axe de rotation d'arbre de mélangeur (39a) et/ou est disposé au-dessus de l'écluse à roue cellulaire (41),
et/ou
b) l'écluse à roue cellulaire (41) comprend une roue cellulaire (42), un boîtier d'écluse (43), une entrée d'écluse (41a) et une sortie d'écluse (41b), où l'entrée d'écluse (41a) est de préférence disposée verticalement en alignement sous l'arbre de mélangeur (39),
où, de préférence, la roue cellulaire (42) comprend un axe de rotation de roue cellulaire (42a) et plusieurs cellules (44) adjacentes les unes aux autres dans le sens circonférentiel pour recevoir la chaux hydratée, où les cellules (44) sont conçues comme des rainures et comprennent de préférence une extension longitudinale parallèle à l'axe de rotation de roue cellulaire (42a),
et où une paroi de cellules des cellules (44) comprend de préférence une section transversale en forme d'arc de cercle, de préférence en demi-cercle, la section transversale s'étendant de préférence sur 180° au maximum.

15. Dispositif selon la revendication 14,
**caractérisé en ce que**
le boîtier d'écluse (43) comprend un canal de soufflage (45) dans la zone de la sortie d'écluse (41b), le canal de soufflage (45) présentant une extrémité d'entrée de canal (45a) et une extrémité de sortie de canal (45b), qui débouchent toutes deux dans l'environnement, et le dispositif de soufflage (46) comprenant une source d'air comprimé (47) pour la mise à disposition, notamment continue, d'air comprimé, qui est raccordée à l'extrémité d'entrée de canal (45a), et
où le canal de soufflage (45) est conçu de telle sorte qu'il est en communication fluidique avec la cellule (44) située dans la zone de la sortie d'écluse (41b),
où le canal de soufflage (45) comprend de préférence un tracé en forme de U.

16. Dispositif selon l'une des revendications 1 à 15,
**caractérisé en ce que**
a) le dispositif (1) comprend au moins un ventilateur radial (36;93;109;115) et un canal de transport (7;110;116) pour transporter la paille (22) au moyen d'air de transport,
et/ou
b) le dispositif (1) comprend un séparateur de pierres (107) pour séparer la paille (22) des particules plus lourdes, par exemple des pierres et/ou de la saleté et/ou des grains et/ou du métal, où le séparateur de pierres (107) est disposé avant le dispositif de mélange (8) et de préférence avant le dispositif de pesage (112),
et/ou
c) le dispositif (1) comprend un broyeur de paille (108) pour fendre au moins partiellement les brins de paille et les broyer à une longueur de brins prédéterminée, de préférence à une longueur de brins de 10 mm à 60 mm, de préférence de 20 mm à 40 mm, où le broyeur de paille (108) est disposé avant le dispositif de mélange (8) et de préférence avant le dispositif de pesage (112), où le broyeur de paille (108) est en outre de préférence disposé après le séparateur de pierres (107), et/ou
d) le dispositif (1) comprend un dispositif d'homogénéisation pour homogénéiser la paille (22), qui est de préférence arrangé directement par la suite du dispositif de démêlage des balles de paille (2), où le dispositif d'homogénéisation est de préférence une vis d'homogénéisation (106) qui comprend un récipient collecteur (118) ainsi qu'une vis d'homogénéisation de transport (119) qui s'y raccorde, ou une goulotte vibrante (5).

17. Dispositif selon l'une des revendications 1 à 16,
**caractérisé en ce que**
le dispositif de pressage (14) comprend un dispositif de réception (87), une presse (88) et de préférence un dispositif de rognage (89) disposés les uns à la suite des autres dans le sens de transport (82), où le dispositif de réception (87) comprend de préférence une bande transporteuse de réception entraînable (90), deux parois de délimitation (91) espacées l'une de l'autre dans la direction horizontale et un dispositif de répartition (92).

18. Dispositif selon la revendication 17,
**caractérisé en ce que**
a) le dispositif de pressage (14) comprend des moyens pour appliquer la paille (22) en méandres, de préférence en croisillons, sur un support, de préférence sur la bande transporteuse de réception (90),
et/ou
b) la presse (88) comprend deux plaques de pressage (94) superposées et chauffables pour appliquer une température à la paille (22) mélangée au mélange de liant thermodurcissable pendant le processus de pressage.

19. Dispositif selon l'une des revendications 1 à 16 pour la fabrication de panneaux isolants de paille (12),
**caractérisé en ce que**
le dispositif de pressage continu de panneaux est un dispositif de pressage continu de panneaux isolants, où le dispositif de pressage continu de panneaux isolants (10) comprend une bande transporteuse (69), un dispositif de projection (68) pour projeter la paille (22) sur la bande transporteuse (69), un dispositif de compactage et d'activation du liant (70) pour compacter la paille (22) mélangée au mélange de liant pour former un cordon de paille continu et pour durcir le mélange de liant, de préférence un dispositif de séchage (72) pour sécher le cordon de paille et un dispositif de coupe (73) pour couper le cordon de paille en panneaux de paille individuels (12),
où, de préférence, le dispositif de projection (68) comprend un récipient collecteur (75), une pelle (76) pouvant être entraînée en rotation autour d'un axe de rotation de pelle (76a) et un moteur d'entraînement (77) pour entraîner la pelle (76),
où la pelle (76) comprend de préférence un arbre de pelle (80), de préférence cylindrique creux, symétrique en rotation par rapport à l'axe de rotation de pelle (76a) et une seule ailette de pelle (81) qui, vue dans la direction radiale par rapport à l'axe de rotation de pelle (76a), fait saillie à partir de l'arbre de pelle (80).

20. Dispositif selon la revendication 19,
**caractérisé en ce que**
a) le récipient collecteur (75) comprend une paroi courbée (78a) et deux parois latérales de récipient (78b) qui s'y raccordent et qui sont disposées de manière opposée par rapport à l'axe de rotation de pelle (76a), où la paroi de récipient courbée (78a) est de préférence symétrique en rotation par rapport à l'axe de rotation de pelle (76a) et est conçue comme une section d'enveloppe cylindrique.
et/ou
b) le récipient collecteur (75) est ouvert vers le haut et comprend une ouverture de récipient (75a) et un espace intérieur de récipient (75b),
où, de préférence, de la paille (22) se trouvant dans l'espace intérieur du récipient (75b) peut être évacuée du récipient collecteur (75) par rotation de la pelle (76) au moyen de la pelle (76), en particulier au moyen de l'ailette de pelle (81).

21. Dispositif selon la revendication 19 ou 20,
**caractérisé en ce que**
le dispositif de pressage continu de panneaux isolants (10) comprend, des deux côtés de la bande transporteuse (69), des parois latérales (83), en particulier verticales, qui sont opposées dans une direction parallèle à l'axe de rotation de la pelle (76a) et s'étendent de préférence jusqu'au dispositif de projection (68) et le protègent latéralement.

22. Procédé de fabrication de panneaux de paille (12;13) à l'aide d'un dispositif (1) selon l'une des revendications 1 à 21, comprenant les étapes suivantes:
a) Démêlage et aération d'une balle de paille (15),
b) Pesage et portionnement d'une quantité souhaitée de paille aérée (22),
c) mélange de la paille (22) avec un mélange liant liquide,
d) compacter la paille (22) mélangée au mélange liant pour former un cordon de paille continu, durcissement du mélange liant et découpe du cordon de paille en panneaux de paille individuelles (12) ou, tout en laissant durcir le mélange liant, compression de la paille (22) mélangée au mélange liant en panneaux de paille individuelles (13).

23. Procédé selon la revendication 22,
**caractérisé en ce que**
a) le durcissement du mélange liant s'effectue par application de température sur le mélange liant,
et/ou
b) la paille (22) est broyée et de préférence fendue avant d'être mélangée avec le mélange liant.
